(19) Europäisches Patentamt
European Patent Office
Office européen des brevets

(11) EP 4 803 225 A1

(12) EUROPEAN PATENT APPLICATION
published in accordance with Art. 153(4) EPC

(43) Date of publication:
**09.09.2026 Bulletin 2026/37**

(21) Application number: **24886423.3**

(22) Date of filing: **30.10.2024**

(51) International Patent Classification (IPC):
***B21D 53/88*** *(2006.01)* ***B21D 22/02*** *(2006.01)*
***B21D 24/00*** *(2006.01)* ***B21D 39/02*** *(2006.01)*
***B21D 5/02*** *(2006.01)* ***B21D 13/02*** *(2006.01)*
***B21D 37/16*** *(2006.01)* ***B21D 37/10*** *(2006.01)*
***B21D 43/28*** *(2006.01)*

(52) Cooperative Patent Classification (CPC):
**B21D 5/02; B21D 13/02; B21D 22/02; B21D 24/00; B21D 37/10; B21D 37/16; B21D 39/02; B21D 43/28; B21D 53/88;** Y02E 60/10

(86) International application number:
**PCT/KR2024/096426**

(87) International publication number:
**WO 2025/095753 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 KR 20230146715**
**15.12.2023 KR 20230183658**
**15.12.2023 KR 20230183769**
**15.12.2023 KR 20230183865**

(71) Applicant: **POSCO Co., Ltd**
**Gyeongsangbuk-do 37859 (KR)**

(72) Inventors:
- **OH, Jin-Keun**
  **Gwangyang-si, Jeollanam-do 57807 (KR)**
- **KIM, Hong-Gee**
  **Incheon 21985 (KR)**
- **SON, Hyun-Sung**
  **Incheon 21985 (KR)**
- **KIM, Seong-Woo**
  **Gwangyang-si, Jeollanam-do 57807 (KR)**
- **JUNG, Chang-Gyun**
  **Incheon 21985 (KR)**
- **LEE, Sea-Woong**
  **Gwangyang-si, Jeollanam-do 57807 (KR)**
- **BOK, Hyun-Ho**
  **Incheon 21985 (KR)**
- **OH, Kyung-Seok**
  **Incheon 21985 (KR)**
- **YUN, Jae-Young**
  **Incheon 21985 (KR)**
- **OH, Kkoch-Nim**
  **Gwangyang-si, Jeollanam-do 57807 (KR)**
- **KIM, Sang-Heon**
  **Gwangyang-si, Jeollanam-do 57807 (KR)**

(74) Representative: **Meissner Bolte Partnerschaft mbB**
**Patentanwälte Rechtsanwälte**
**Postfach 86 06 24**
**81633 München (DE)**

# (54) PLATED STEEL SHEET FOR HOT PRESS FORMING, HOT PRESS-FORMED MEMBER, HOT PRESS-FORMED PARTS, MANUFACTURING METHODS THEREFOR, FORMING DEVICE, FORMING METHOD, BATTERY CASE BRACKET, AND BATTERY PACK MODULE

(57) One aspect of the present invention relates to a steel suitable for hot press forming and, more specifically, to an aluminum-based plated steel sheet for hot press forming, a hot press-formed member and manufacturing methods therefor. In addition, another aspect of the present invention relates to: a forming device for forming a high-strength steel; a forming method; a battery case bracket formed thereby; and a battery pack module.



Processed by Luminess, 75001 PARIS (FR)

(Cont. next page)

[FIG.1]

A-1
A-20
A
R1
A-10
A-10
A'

## Description

### Technical Field

An aspect of the present disclosure relates to a steel suitable for hot press forming, and more particularly, to a plated steel sheet for hot press forming, a hot formed member, a hot press-formed part, and a manufacturing method therefor. In addition, another aspect of the present disclosure relates to a forming device for forming a high-strength steel, a forming method, a battery case bracket formed thereby, and furthermore, a battery pack module.

### Background Art

According to the demand for vehicle weight reduction and safety improvement, the application of high-strength steel is actively underway. In recent years, due to depletion of oil energy sources and high interest in the environment, regulations on improving fuel efficiency of automobiles are becoming increasingly stricter day by day. In terms of materials, as one method for improving the fuel efficiency of automobiles, a thickness of a steel sheet used may be decreased, but when the thickness is decreased, there may be a problem with car safety, and thus, improvement of steel sheet strength should be supported.

For this reason, a demand for a high-strength steel sheet has been continuously increasing, and various types of steel sheets have been developed. However, since these steel sheets have high strength in and of themselves, workability thereof may be poor. That is, since a product of strength and elongation of the steel sheet tends to always have a constant value for each grade, when the steel sheet strength is increased, elongation, an indicator of workability, may be decreased.

In order to solve the problem, a hot press forming method has been suggested. The hot press forming method is a method in which a steel sheet is worked at a high temperature which is favorable for steel sheet working and quenched at a low temperature, thereby forming a low-temperature structure such as martensite in the steel sheet to increase the strength of a final product. In this case, a workability problem may be significantly decreased when a member having a high strength is manufactured.

The hot press forming method is a working method of heating a blank, forming the heated blank into a desired shape through press forming, and cooling the same with a mold closed to manufacture a high-strength formed part.

In the hot press forming method as such, when the hot press forming method which is forming at a high temperature is used, even parts having a small curvature radius may be formed without cracks due to excellent characteristics of an elongation at a high temperature where forming is performed of 50% or more, and thus, the shape of formed parts which may not be secured with cold ultra-high strength may be secured. Besides, hot press-formed parts manufactured by hot working (hot stamping) a blank may produce various shapes of parts as compared with conventional giga-grade cold formed materials, since forming is performed at a high temperature where general formability is excellent.

However, since according to the hot press forming method, a steel sheet is heated to a high temperature, a steel sheet surface is oxidized, and thus, a process of removing oxides on the surface of the steel sheet should be added after press forming. As a method for solving the problem, Patent Document 1 has been suggested. In Patent Document 1, a steel sheet plated with aluminum is used in hot press forming or a process of heating and quenching after forming at room temperature (simply referred to as "post-heat treatment"), an aluminum plating layer is present on the surface of the steel sheet, and thus, the steel sheet is not oxidized during heating.

However, when the aluminum plating layer is formed on the surface and then heated, the aluminum plating layer may be melted, depending on a heating rate and contaminate equipment. In addition, in the case of members having high strength, the so-called hydrogen delay destruction problem in which hydrogen trapped in a base steel sheet is accumulated to cause even destruction of parts may arise.

As a method for solving the problem, a method of, before heating, heating an aluminum-plated steel sheet to form an aluminum-iron alloy layer on the steel sheet, and then using the steel sheet on which the aluminum-iron alloy plating layer is formed in hot press forming has been suggested. That is, when a plating layer is alloyed in a relatively low temperature range before heating for hot press forming, aluminum is already alloyed even in the case of heating at a relatively high rate, and thus, a problem due to aluminum melting may be prevented even when heating is performed at a higher temperature than the melting point of aluminum. In addition, since a plated steel sheet which is alloyed in advance may have an alloy layer having a structure which facilitating hydrogen discharge on the surface, it may have an effect of decreasing occurrence of hydrogen delay destruction.

Meanwhile, when the plated steel sheet is applied as a material for hot press forming, the plated steel sheet should have sufficient formability, and thus, paint adhesion of the hot press-formed member obtained by hot press forming and the like may be improved.

Accordingly, the development of a method for improving high-temperature formability of the plated steel sheet for hot press forming is required.

Meanwhile, a battery system used in electric vehicles uses a battery case for protecting a battery cell inside, and

the battery case should guarantee collision safety performance and water tightness.

The battery case for electric vehicles is usually manufactured with expensive aluminum extrusions or sheet materials, but application of steel materials which are price competitive and easy to recycle is being attempted. However, since high-strength steel has poor formability, it is difficult to form such high-strength steel to have a desired shape.

The high-strength steel is sometimes applied only as a straight-line parts having a simple cross-section which is formed by roll forming. When the battery case is manufactured with the straight-line parts, there is an alignment problem due to spring back of thin steel plates and parts, and thus, it is difficult to perform butt welding of the corner where two straight-line parts meet.

In order to overcome the problem, a separate part (bracket) for supporting the two straight line parts by a method of wrapping the corner area may be utilized. Since the part has a longitudinal curved portion to which a required corner angle is applied and also has a flange shape connected to the upper and lower plates of the battery pack simultaneously, it is difficult to form the part.

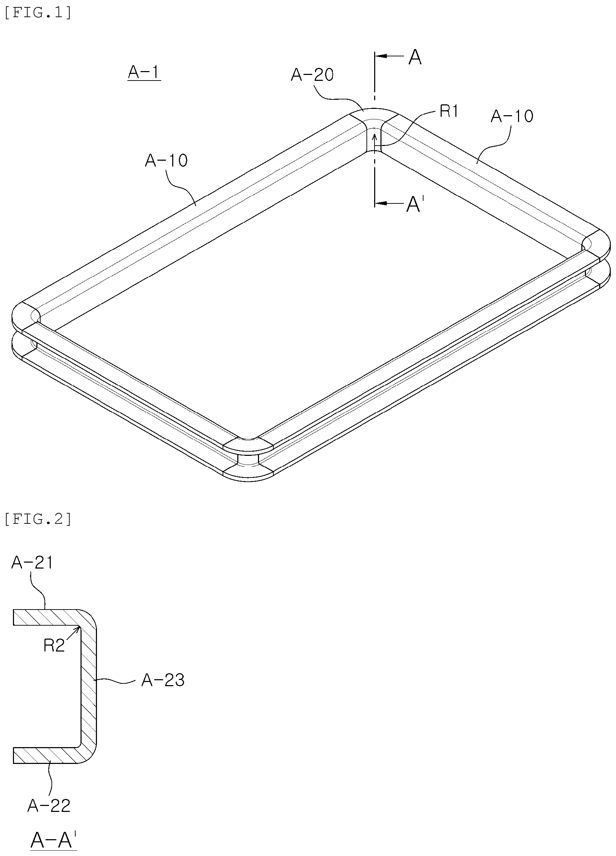

FIG. 1 illustrates a schematic diagram of a side frame of the battery case, and Fig. 2 illustrates a cross-sectional view taken along the line A-A' of FIG. 1. As seen in FIGS. 1 and 2, in the side frame A-1 of the battery case, a frame A-10 should have flanges formed in the upper and lower portions in order to be connected to the upper and lower plates, and this is the same as in a bracket A-20. That is, the bracket A-20 also includes a main body A-23 and flanges A-21 and A-22 which are bendingly formed from the main body A-23. The bracket A-20 is difficult to be formed, since it includes a curved portion having a curvature radius (R1) and also has a curved surface having a curvature radius (R2) formed in the upper and lower portions for forming flanges.

When the parts include curves or transition of dimensions, a stretch flange or shrink flange is formed on the surfaces of the flanges A-21 and A-22 depending on the morphological characteristics of the portion. In addition, two types of flanges may be simultaneously formed in the state in which one type is dominant. In the stretch flange area involving thickness reduction, when a forming amount is excessively large or formability a material is insufficient as compared with the shape required in the parts, necking which is a phenomenon of local cross-sectional area reduction due to plastic instability or a subsequent rupture problem may occur. Meanwhile, in the flange shrinkage area, a thickness increases due to an in-plane compressive load increase and buckling and wrinkle problems may occur. When the wrinkles or folding occurs, a non-uniform gap is formed in the battery pack, which may damage the water tightness of the battery pack.

Meanwhile, in order to guarantee the strength uniformity and collision safety performance in the bracket A-20, the bracket should be formed with the same material as the frame A-10 which is a straight-line part, and when it is formed with a high-strength steel, it is extremely difficult to form a flange having a curved portion.

In the case of a common steel sheet for cold forming, when it becomes an ultra-high-strength steel having a tensile strength of 980 MPa or more, there is increased risks of wrinkles and rupture due to the high strength and insufficient ductility of materials, flange working of the curved portion becomes difficult, and thus, the use of a press-hardened steel as a substitute is increasing.

Since the press-hardened steel is formed at a high temperature, it has low strength at the time of forming and rich ductility, and may be formed into a complicated shape. However, since the forming should be performed at once while maintaining a high temperature, it is difficult to apply a blank holder or drawbead which is a rupture and wrinkle control means, and thus, there is a limitation in terms of a freedom degree of forming method.

Besides, though a high-strength steel generally has a problem of being incapable of forming parts having a small curvature radius due to poor bendability, due to the recent issues of improving vehicle weight reduction and safety in electric vehicles and the like, formed parts, having high strength but a small curvature radius as compared with the conventional parts, and thus, are easier to use a space, are required.

Meanwhile, since in the hot press forming method, forming should be completed before a high-temperature material heated in a heating furnace is cooled in the air, forming is not performed sequentially through several stages of molds as used in cold forming. Due to the demerits, it is also difficult to form a plurality of parts having a hat shape by the hot press forming method. Since the forming is not performed at once, a method of separately forming and then attaching to each other in an assembly step may be used, but working costs may be increased due to performance and separate forming of each part.

(Patent Document 1) U.S. Patent Registration No. 6296805.

(Patent Document 2) U.S. Patent Publication No. 2014-0056754

(Patent Document 3) Korean Patent Laid-Open Publication No. 10-2020-006635

(Patent Document 4) Korean Patent Laid-Open Publication No. 10-2023-0092430

## Summary of Invention

Technical Problem

A first aspect of the present disclosure is to provide a plated steel sheet having excellent hot formability at a high temperature, a hot formed member obtained by hot forming the plated steel sheet, and a method for manufacturing the same, in providing an aluminum-based plated steel sheet for hot press forming.

A second aspect of the present disclosure is to provide a forming device capable of forming a bracket having a flange and a curved portion formed, a forming method, and a bracket manufactured thereby.

A third aspect of the present disclosure is to provide a formed part having a small curvature radius while having higher tensile strength than conventional parts, or a battery pack module including the same.

A fourth aspect of the present disclosure is to provide a press formed part having significantly decreased occurrence of damages such as cracks, during hot press forming for manufacturing a plurality of parts having a hat shape, and a method for manufacturing the same.

An object of the present disclosure is not limited to the above description. Additional objects of the present disclosure are described throughout the specification, and any person with ordinary skill in the art to which the present disclosure pertains will have no difficulty in understanding of the additional object of the present disclosure from the description in the specification of the present disclosure.

Solution to Problem

Hereinafter, the technical solutions of the present disclosure will be described. Though not essential, it should be noted that the technical solution according to each aspect of the present disclosure may be useful in the technical solution of other aspects. For example, the steel material for hot forming and/or the manufacturing method thereof according to the first aspect may be useful for the hot formed member, various parts obtained therefrom, and the manufacturing method thereof according to the second to sixth aspects. Besides, the method for manufacturing parts or the heat treatment conditions used therein according to the second and third aspects may be useful in the process of manufacturing the battery case bracket or the formed part, and the like according to the fourth to sixth aspects. In addition, the composition and the various useful parameters according to each aspect of the present disclosure may be appropriately combined with other aspects to obtain favorable effects.

According to an aspect of the present disclosure, a plated steel sheet for hot press forming includes: a base steel sheet; and an aluminum-based plating layer on one or both surfaces of the base steel sheet.

In an example embodiment of the present disclosure, a surface of the plating layer of the plated steel sheet for hot press forming may have a maximum roughness (Rt) of 4.0 to 25.0 μm and the number of peaks per unit length (RPc) of 30 to 90 peaks/cm.

In addition thereto, according to an example embodiment of the present disclosure, a relationship between a deposition amount of the plating layer and Rt may satisfy the following Relation 1:

[Relation 1]

$$27.0 \leq (\copyright/3) + (Rt/2) \leq 38.0$$

wherein the unit of Relation 1 is μm, and © is a plating deposition amount.

As such, the plated steel sheet for hot press forming having a plating layer having a surface controlled with specific conditions may have excellent high-temperature formability in a high-temperature heating process for hot press forming. Besides, a hot press-formed member obtained by hot press forming the plated steel sheet for hot press forming may have excellent paint adhesion and friction characteristics.

In an example embodiment of the present disclosure, the aluminum-based plating layer may have a composition including, by weight: 5.0 to 11.0% of silicon (Si), 10.0% or less of iron (Fe), a remainder of aluminum (Al), and unavoidable impurities.

In an example embodiment of the present disclosure, the base steel sheet may have a composition including, by weight: 0.02 to 0.60% of carbon (C), 0.001 to 2.000% of silicon (Si), 0.001 to 1.000% of aluminum (Al), 0.1 to 4.0% of manganese (Mn), 0.050% or less of phosphorus (P), 0.0200% or less of sulfur (S), 0.0200% or less of nitrogen (N), 0 to 1.0000% of titanium (Ti), 0 to 1.0000% of niobium (Ni), 0 to 1.0000% of vanadium (V), 0 to 0.0100% of boron (B), 0 to 1.00% of chromium (Cr), 0 to 1.00% of molybdenum (Mo), 0 to 1.00% of tungsten (W), 0 to 1.0% of copper (Cu), 0 to 1.0% of nickel (Ni), 0 to 1.00% of antimony (Sb), 0 to 1.00% of tin (Sn), 0 to 0.10% of calcium (Ca), 0 to 0.10% of magnesium (Mg), 0 to 1.00% of cobalt (Co), 0 to 1.00% of arsenic (As), 0 to 1.00% of zirconium (Zr), 0 to 1.00% of bismuth (Bi), 0 to 0.3% of rare

earth elements (REM), a remainder of Fe, and unavoidable impurities.

According to another aspect of the present disclosure, a method for manufacturing a plated steel sheet for hot press forming includes: preparing a base steel sheet; forming an aluminum-based plating layer on one or both surfaces of the base steel sheet to obtain a plated steel sheet; and temper rolling the plated steel sheet.

In an example embodiment of the present disclosure, the temper rolling may be performed using a roll having a surface of Rt: 2 to 8 μm and RPc: 46 to 120 peaks/cm with a pressing force of 100 to 500 tons.

By the method, a plated steel sheet for hot press forming having a controlled plating layer surface may be obtained.

In an example embodiment of the present disclosure, the forming of an aluminum-based plating layer to obtain a plated steel sheet may be a process of immersing a base steel sheet in an Al-based plating bath including, by weight: 5.0 to 11.0% of Si, 4.0% or less of Fe, a remainder of Al, and unavoidable impurities. Herein, the base steel sheet may have the alloy composition described above.

In an example embodiment of the present disclosure, heating the plated steel sheet on which the aluminum-based plating layer has been formed to a temperature range of 670 to 900°C to perform an alloying treatment may be further included.

According to another aspect of the present disclosure, a hot press-formed member includes: a base steel sheet and an aluminum-based plating layer which is formed on the base steel sheet and has a thickness (T) of 30.0 to 50.0 μm.

In an example embodiment of the present disclosure, a surface of the plating layer of the hot press-formed member may have a maximum roughness (Rt) of 6.0 to 26.0 μm and the number of peaks per unit length (RPc) of 60 to 130 peaks/cm.

In an example embodiment of the present disclosure, a relationship between the thickness and Rt of the plating layer of the hot press-formed member may satisfy the following Relation 2:

[Relation 2]

$$40.0 \leq T + (Rt/2) \leq 57.0$$

wherein the unit of Relation 2 is μm, and T is the thickness of the plating layer.

The hot press-formed member has excellent paint adhesion and friction characteristics, and in an example embodiment of the present disclosure, the member may have a friction coefficient of 0.50 or less.

In an example embodiment of the present disclosure, since the aluminum-based plating layer of the hot press-formed member is alloyed in a hot press forming process, the aluminum-based alloyed plating layer may be formed of an Al-Fe alloy having the sum of contents of Al and Fe of 89 wt% or more.

Though not essential, the steel sheet or the hot formed member according to the first aspect of the present disclosure may secure improved performance, when combined with favorable characteristics of other aspects to be described later.

According to a second aspect of the present disclosure, a forming device includes: a pad; a die disposed in an outside in a first direction of the pad; and a punch which is disposed in a lower portion of the pad and includes a main body in which a punch forming part is formed, wherein the punch forming part includes a linear first punch forming part, a curved second punch forming part having a forming part curve curvature radius (Rp), and a linear third punch forming part, when viewed in the first direction; the first to third punch forming parts are continuously disposed along a second direction perpendicular to the first direction on a horizontal plane; the first to third punch forming parts include first to third extended surface forming parts on a plane perpendicular to the first direction on both sides of the first direction, first to third main body forming parts on a plane in a direction towards the pad, and first to third curved surface forming parts having a bending curvature radius (r) between the extended surface forming part and the main body forming part; the pad includes pressurizing surfaces corresponding to the first to third main body forming parts; the die includes a linear first die forming part, a curved second die forming part having a die curve curvature radius (Rd), and a linear third die forming part, when viewed in the first direction; the first to third die forming part is continuously disposed along the second direction; and when upper positions of the third main body forming part and the third die forming part are disposed on the same plane, the first main body forming part is disposed above the upper position of the first die forming part, when viewed in the first direction.

According to an example embodiment of the present disclosure, forming of steel having insufficient formability (for example, high-strength steel) may be allowed.

In an example embodiment of the present disclosure, the punch may further include fourth and fifth punch forming parts which are symmetrical to the second and first punch forming parts around the third punch forming part, the die may further include fourth and fifth die forming parts which are symmetrical to the second and first die forming parts around the third die forming part, and the pressurizing surface of the pad may also include surfaces corresponding to the main body

forming parts of the fourth and fifth punch forming parts.

In an example embodiment of the present disclosure, the punch may include a support part which supports a material before forming in the outside of the first and fifth forming parts around the third punch forming part.

In an example embodiment of the present disclosure, the forming part curve curvature radius (Rp) may be smaller than the die curve curvature radius (Rd).

In an example embodiment of the present disclosure, a length in the second direction (lp) of the third main body forming part may be longer than a length in the second direction (ld) of the third die forming part.

In an example embodiment of the present disclosure, the center of the die curve curvature radius (Rd) in the second direction coincides with the center of the third main body forming part, when viewed in the first direction, and the second and fourth punch forming parts may have an angle (θ) at which extended lines of imaginary tangents intersect at both ends of 95 to 135°, when viewed in the first direction.

In an example embodiment of the present disclosure, the first to fifth die forming parts may include first to fifth die curved surface forming parts formed into a curved surface at a relatively close position to the punch in the first direction and first to fifth plane forming parts at a relatively distant position to the punch, the curved surfaces of the first to fifth die curved surface forming parts has an elevated height as they are close to the punch, and when the upper portions of the third main body forming part and the third die forming part are disposed on the same plane, at least a part of the second main body forming part may be under the upper portion of the second die forming part, when viewed in the first direction.

In an example embodiment of the present disclosure, at least one of the punch and the die may include a cooling channel inside, and the forming part curve curvature radius (Rp) and the bending curvature radius (r) may satisfy: 25 mm ≤ Rp (mm) + r (mm) ≤ 30 mm.

According to another aspect of the present disclosure, a method for forming a material includes: a material settling process of settling a material which is longer than a punch having a forming part in a first direction in the punch; a first forming process of forming the material into a shape of a main body forming part of the punch through a pad disposed on an upper portion of the punch; and a second forming process of forming the material so that the material follows a shape of the forming part of the punch through a die disposed on an outside of the pad in the first direction, wherein in the second forming process, the die performs forming in the order of an edge part, a center portion, and a middle portion between the center and the edge portions of the material in the first direction and in a second direction perpendicular to a vertical direction.

In an example embodiment of the present disclosure, the forming part may include a linear first forming part, a curved second forming part having a forming part curve curvature radius (Rp), a linear third forming part, a curved fourth forming part having the forming part curve curvature radius (Rp), and a linear fifth forming part, when viewed in the first direction, the middle part of the die may be formed into a curved surface having a die curve curvature radius (Rd), and the die curve curvature radius (Rd) may be larger than the forming part curve curvature radius (Rp).

In an example embodiment of the present disclosure, the material may be a steel sheet, the material settling process is performed in a state in which the material is heated to an AC3 temperature or higher of the material, and a cooling process of cooling the material so as to have a martensite structure by at least one of the punch and the die may be further included.

In an example embodiment of the present disclosure, the material may be the plated steel sheet for hot press forming described above or a hot formed member obtained by hot forming the plated steel sheet for hot press forming. As an example, the plated steel sheet for hot press forming and the hot formed member may have the alloy composition described above and may be manufactured by the manufacturing method described above.

In an example embodiment of the present disclosure, in the material settling process, the material may include a notch formed toward the center of the material in the first direction at a position corresponding to the center portion of the die.

In an example embodiment of the present disclosure, the first to fifth forming parts may include first to fifth extended surface forming parts on a surface perpendicular to the first direction on both sides of the first direction, first to fifth main body forming parts on a surface in a direction toward the pad, and first to fifth curved surface forming parts having a bending curvature radius (r) between the extended surface forming part and the main body forming part, and the forming part curve curvature radius (Rp) and the bending curvature radius (r) may satisfy: 25 mm ≤ Rp (mm) + r (mm) < 30 mm, 3 mm ≤ r (mm) ≤ 10 mm.

According to another aspect of the present disclosure, a battery case bracket includes: a formed surface having a forming part curve curvature radius (Rp), wherein the formed surface includes a main body; a flange which is bendingly extended from the end of the main body; and a curved surface connecting the main body and the flange with a bending curvature radius (r), the bracket is formed of a steel material including boron having a tensile strength of 1200 MPa or more, includes a martensite structure, and has a forming part curve curvature radius (Rp) and a bending curvature radius (r) satisfying: 25 mm ≤ Rp (mm) + r (mm) ≤ 30 mm, 3 mm ≤ r (mm) ≤ 10 mm.

In an example embodiment of the present disclosure, a minimum thickness (tmin) and an initial thickness before forming (tnin) in the flange may satisfy: (tini - tmin)/tini ≤ 0.2, and a maximum thickness (tmax) and an initial thickness

before forming (tnin) in the curved surface may satisfy (tini - tmax)/tini ≥ -0.4.

In an example embodiment of the present disclosure, the bracket may have an angle (θ) at which extended lines of imaginary tangents intersect at both ends of the formed surface of 95 to 135°.

The battery case bracket according to an example embodiment of the present disclosure may be manufactured by the forming method described above.

According to an example embodiment of the present disclosure, the weight reduction, water tightness, and collision safety performance of the battery pack may be secured through the bracket manufactured by the forming method described above.

Though not necessarily essential, the article according to the second aspect of the present disclosure may secure further improved performance by combination with favorable characteristics of other aspects described later.

According to a third aspect of the present disclosure, a hot press-formed part of high-strength steel includes: a first wall extended in a first direction, a second wall extended in a direction intersecting the first wall, and a third wall extended in the first direction and in a direction intersecting the second wall, wherein a curvature portion is formed between the first wall and the second wall, and the first wall, the second wall, and the curvature portion are integrally formed and satisfy the following Relation 3:

Height (hw) of wall part ≤ 13.4 * angle (θw) of wall part + 182.4 [Relation 3]

wherein the height (hw) of wall part is a length from the first wall to the third wall in a direction perpendicular to the first direction and is in a mm unit, the angle (θw) of the wall part is an angle between an arbitrary line perpendicular to the first direction and the second wall and is in a degree unit, and calculation is performed by making the left and right sides dimensionless.

In an example embodiment of the present disclosure, the high-strength steel may be the plated steel sheet for hot press forming described above.

According to an example embodiment of the present disclosure, a formed part having high tensile strength and a small curvature may be provided.

In an example embodiment of the present disclosure, the first wall, the second wall, and the curvature portion may be integrally formed by working a sheet material. In addition, the first wall, the second wall, and the curvature portion may be integrally formed by working the sheet material, the curvature radius (r) of the curvature portion may be 0.5 mm or more, and a ratio (r/t) of the curvature radius (r) to the thickness (t) of the sheet material may be less than 2.5.

In an example embodiment of the present disclosure, the formed part may have the tensile strength of 1300 to 2100 MPa.

In an example embodiment of the present disclosure, the formed part may include a third wall and a fourth wall parallel to the first direction, and a fifth wall connected to the third wall and the fourth wall, the third wall is extended from the second wall, and the first wall and the fifth wall may be integrally formed.

In an example embodiment of the present disclosure, an angle between an arbitrary line perpendicular to the first direction and the second wall may be 5° or less.

In an example embodiment of the present disclosure, a microstructure of the formed part may be formed of martensite at 98% or more of an area fraction.

According to another aspect of the present disclosure, a battery pack module includes: a battery case formed around a battery pack, a base which is disposed in a lower portion of the battery case and is connected to the battery case to form a space where the battery pack is disposed, and a hot press-formed part which is disposed across an inside of the battery case and is connected to the battery case and the base.

According to an example embodiment of the present disclosure, a part having a high space utilization may be manufactured when manufacturing a module such as a battery pack.

In an example embodiment of the present disclosure, the hot press-formed part may be disposed in multiples at regular intervals in the battery case.

Though not necessarily essential, the part according to the third aspect of the present disclosure may secure further improved performance by combination with favorable characteristics of other aspects described later.

According to a fourth aspect of the present disclosure, a press formed part includes: a top plate part, a vertical wall part consecutive to the top plate part, a plurality of deformation portions having a hat shape including a boundary part consecutive to the vertical wall part and has a predetermined height, and flat plate parts which are disposed between the plurality of deformation portions, connect the two adjacent boundary parts, and have a predetermined length.

In an example embodiment of the present disclosure, a relationship between the predetermined length and the predetermined height may be determined based on the number of the deformation portions.

In an example embodiment of the present disclosure, three deformation portions may be provided, and a relationship between the predetermined length and the predetermined height may be defined by the following Equation (1): $w \leq 114.85e^{0.0455h}$ ... Equation (1), wherein w is the predetermined length, and h is a predetermined height.

In an example embodiment of the present disclosure, four or more deformation portions may be provided, and a relationship between the predetermined length and the predetermined height may be defined by the following Equation (2): $w \leq 46.309e^{0.105h}$ ... Equation (2), wherein w is the predetermined length, and h is a predetermined height.

In an example embodiment of the present disclosure, the predetermined length (w) may be 20 mm or more.

In an example embodiment of the present disclosure, the press formed part may be manufactured using a hot press forming method.

In an example embodiment of the present disclosure, the hot press forming method may be the method described above.

According to another aspect of the present disclosure, a method for manufacturing a press formed part includes: supplying a metal sheet to a working position, performing first press forming of the metal sheet using a first mold provided with a plurality of first pressurizing parts and an intermediate pressurizing part, performing second press forming of the metal sheet using the first mold and a second mold provided with a plurality of second pressurizing parts, after performing the first press forming of the metal sheet.

In an example embodiment of the present disclosure, the metal sheet may be the plated steel sheet for hot press forming described above.

In an example embodiment of the present disclosure, the press forming process may use the forming device described above.

In an example embodiment of the present disclosure, in the supplying of a metal sheet to a working position, the metal sheet may be supplied between the first mold and the intermediate pressurizing part, but a center area of the metal sheet may be disposed at a position facing the intermediate pressurizing part.

In an example embodiment of the present disclosure, in the supplying of a metal sheet to a working position, the intermediate pressurizing part may be disposed above the second mold, at the working position.

In an example embodiment of the present disclosure, in the supplying of a metal sheet to a working position, the intermediate pressurizing part may be disposed at a position at which a height difference between the intermediate pressurizing part and the second mold is 65% or more of the height of the press formed part.

In an example embodiment of the present disclosure, in the first press forming of the metal sheet, the intermediate pressurizing part may be introduced into the first pressurizing part disposed in the middle among the plurality of first pressurizing parts and press the middle area of the metal sheet.

In an example embodiment of the present disclosure, in the second press forming of the metal sheet, the second pressurizing part may be introduced into the first pressurizing part disposed in the outside among the plurality of first pressurizing parts and press the outer area of the metal sheet.

In an example embodiment of the present disclosure, in the first press forming of the metal sheet and in the second press forming of the metal sheet, the metal sheet may be formed using a hot press forming method.

In an example embodiment of the present disclosure, between the first press forming of the metal sheet and the second press forming of the metal sheet, press forming the metal sheet using an additional intermediate pressurizing part disposed in the outside of the middle pressurizing part and the first mold may be further included.

Advantageous Effects of Invention

According to an aspect of the present disclosure, high-temperature formability during heating at a high temperature for hot press forming may be secured by controlling a plating layer surface of the plated steel sheet for hot press forming, and the paint adhesion, friction characteristics, and the like of the hot press-formed member obtained by the hot press forming may be secured.

According to another aspect of the present disclosure, a forming device capable of forming a bracket having a flange and a curved portion formed, a forming method, and a bracket manufactured thereby may be provided, and the weight reduction, the water tightness, and the collision safety performance of a battery pack may be secured by the bracket.

According to another aspect of the present disclosure, a formed part having high tensile strength and a small curvature and may be manufactured at once to be convenient for working may be provided, and also, a part having a high space utilization when manufacturing a module such as a battery pack may be manufactured.

According to another aspect of the present disclosure, middle pressurizing parts having a height difference are disposed between upper/lower molds, and press forming may be performed on a metal sheet using three pressurizing parts. Herein, through a stepwise forming process of first pressing the center area of the metal sheet and then sequentially pressing the outer area, concentration of strain at a specific position of the metal sheet during stamping may be prevented. Thus, the press formed part is prevented from being damaged in the manufacturing process, and part quality may be improved.

Various and beneficial merits and effects of the present disclosure are not limited to the descriptions above, and may be more easily understood in a process embodiment describing specific example embodiments of the present

disclosure.

Brief Description of Drawings

FIG. 1 is a schematic diagram of a side frame of a battery case.
FIG. 2 is a cross-sectional view of line A-A' of FIG. 1.
FIG. 3 is an exploded perspective view of a forming device according to an example embodiment of the present disclosure.
FIG. 4 is a side view of the forming device according to an example embodiment of the present disclosure.
FIG. 5 is a flowchart of a forming method according to an example embodiment of the present disclosure.
FIG. 6 is a plan view of a material added to the forming device according to an example embodiment of the present disclosure.
FIG. 7 is a schematic perspective view showing a first forming process in the forming method according to an example embodiment of the present disclosure.
FIG. 8 is a schematic perspective view showing a second forming process in the forming method according to an example embodiment of the present disclosure.
FIG. 9a is a perspective view of the second forming process viewed in another direction in the forming method according to an example embodiment of the present disclosure, and FIG. 9b is a front view showing the second forming process in the forming method according to an example embodiment of the present disclosure.
FIG. 10 is a front view showing a cooling process in the forming method according to an example embodiment of the present disclosure.
FIG. 11 is a perspective view showing a trimming process in the forming method according to an example embodiment of the present disclosure.
FIG. 12 is a perspective view of a bracket manufactured by the forming method according to an example embodiment of the present disclosure.
FIG. 13 is a distribution chart of a thickness reduction rate of a formed article manufactured by the forming method according to an example embodiment of the present disclosure.
FIG. 14 is a distribution chart of a thickness reduction rate of a formed article manufactured by a forming method of Comparative Illustration 1-1.
FIG. 15 is a thickness reduction rate distribution graph in a cross-section of the formed articles of FIGS. 13 and 14.
FIG. 16 is a side view showing a forming method of Comparative Illustration 1-2.
FIG. 17 is a perspective view of a formed article manufactured by the forming method of Comparative Illustration 1-2.
FIG. 18 is a perspective view of a formed part according to an example embodiment of the present disclosure.
FIG. 19 is a front view of a formed part according to an example embodiment of the present disclosure.
FIGS. 20a, 20b, 21a, and 21b are drawings showing interpretation based on the example and the comparative example of the present disclosure, and referring to Table 1, FIG. 20a illustrates Inventive Illustration 2-1, FIG. 20b illustrates Comparative Illustration 2-1, FIG. 21a illustrates Inventive Illustration 2-3, and FIG. 21b illustrates Comparative Illustration 2-3.
FIG. 22 is a perspective view of a battery pack module according to an example embodiment of the present disclosure.
FIG. 23 which expresses a cross section of a part of the battery pack module according to an example embodiment of the present disclosure is a drawing for showing a space utilization when the battery pack is disposed, in which (a) shows the case in which a curvature radius is small, and (b) shows the case in which a curvature radius is larger than that of (a).
FIG. 24 is a perspective view illustrating a press formed part according to an example embodiment of the present disclosure.
FIG. 25 is a perspective view illustrating a press formed part according to another example embodiment of the present disclosure.
In FIG. 26, (a) is a graph showing a relationship between a predetermined length and a predetermined height of the press formed part according to an example embodiment of the present disclosure, and (b) is a graph showing a relationship between a predetermined length and a predetermined height of the press formed part according to another example embodiment of the present disclosure.
In FIG, 27, (a) shows an example showing a strain applied to the press formed part manufactured using a conventional manufacturing method, and (b) shows an example showing a strain applied to the press formed part manufactured using the manufacturing method according to the example embodiments of the present disclosure.

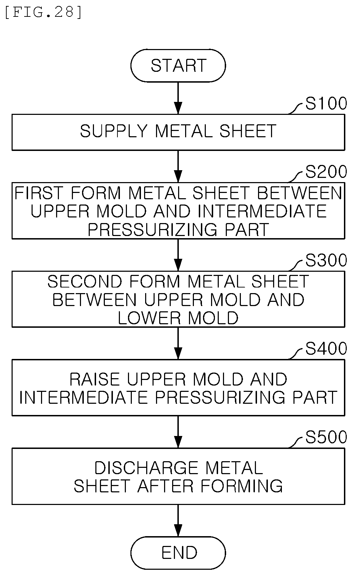

FIG. 28 is a flow chart showing the method for manufacturing a press formed part according to an example embodiment of the present disclosure.

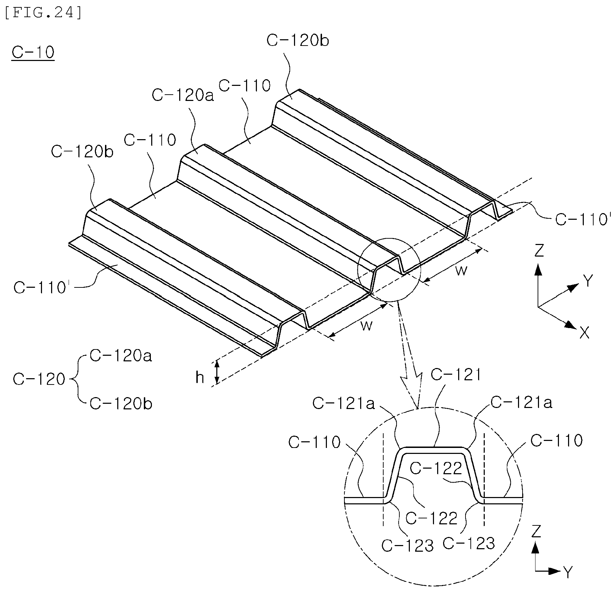

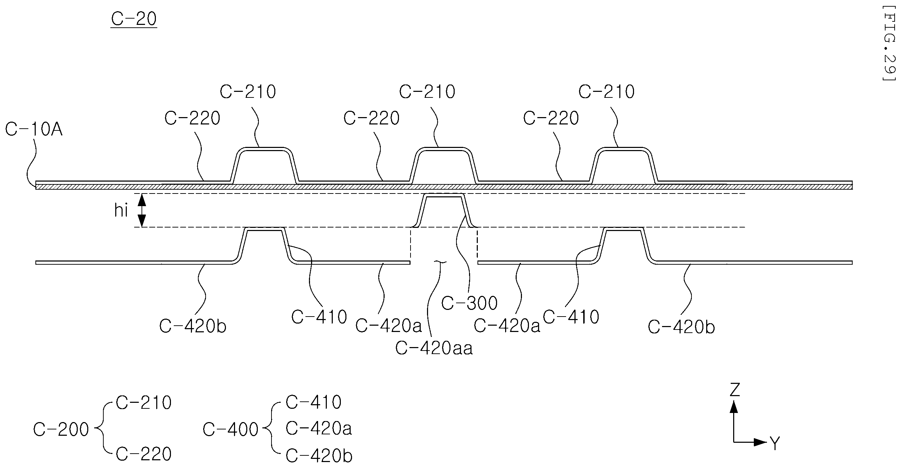

FIG. 29 schematically illustrates a first process of manufacturing the press formed part of FIG. 24.

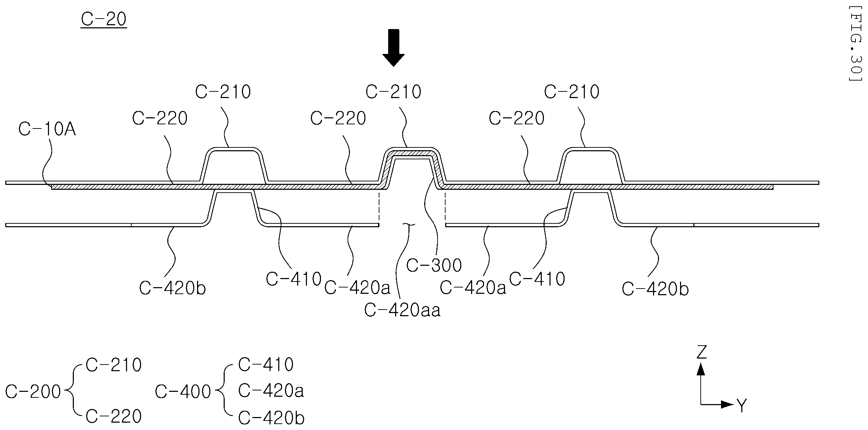

FIG. 30 schematically illustrates a second process of manufacturing the press formed part of FIG. 24.

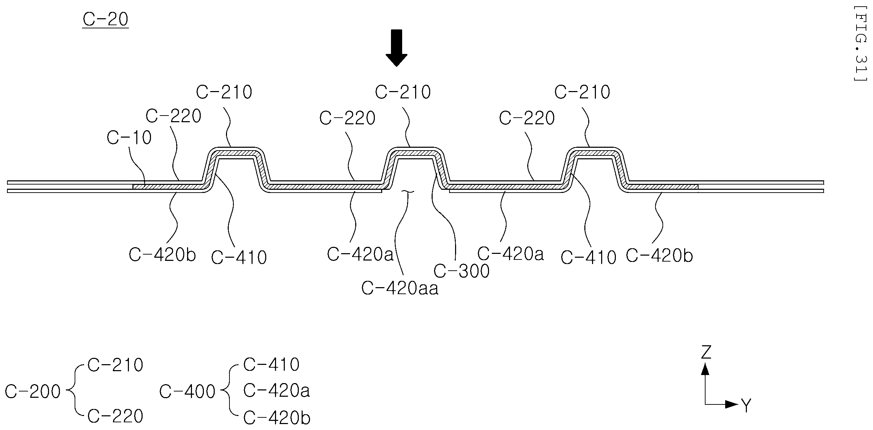

FIG. 31 schematically illustrates a third process of manufacturing the press formed part of FIG. 24.

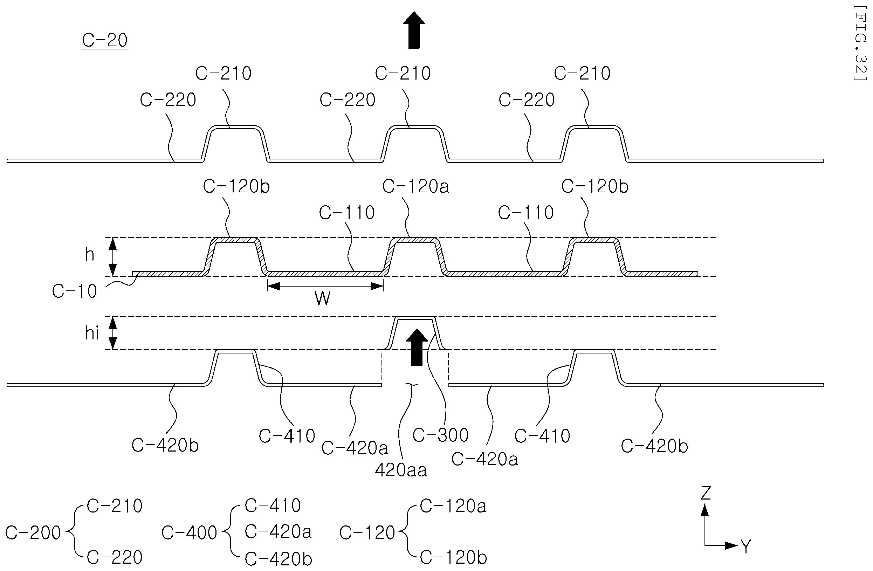

FIG. 32 schematically illustrates a fourth process of manufacturing the press formed part of FIG. 24.

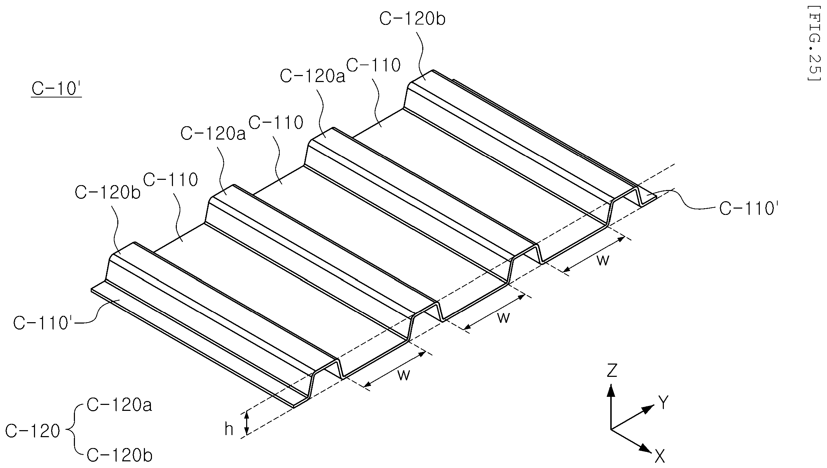

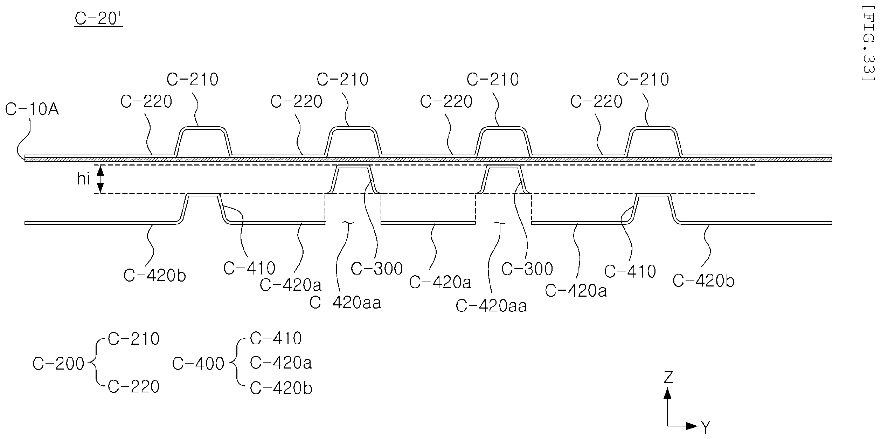

FIG. 33 schematically illustrates a first process of manufacturing the press formed part of FIG. 25.

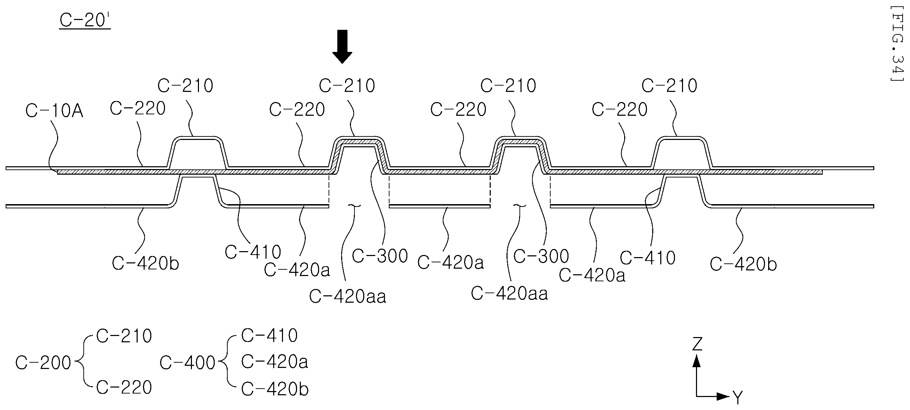

FIG. 34 schematically illustrates a second process of manufacturing the press formed part of FIG. 25.

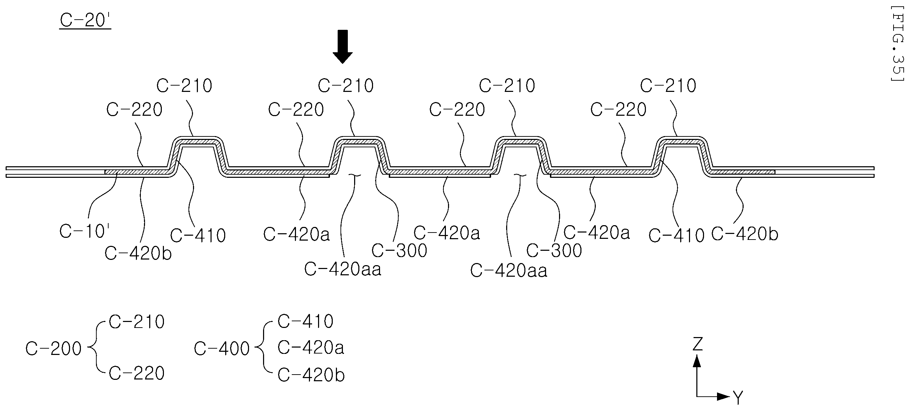

FIG. 35 schematically illustrates a third process of manufacturing the press formed part of FIG. 25.

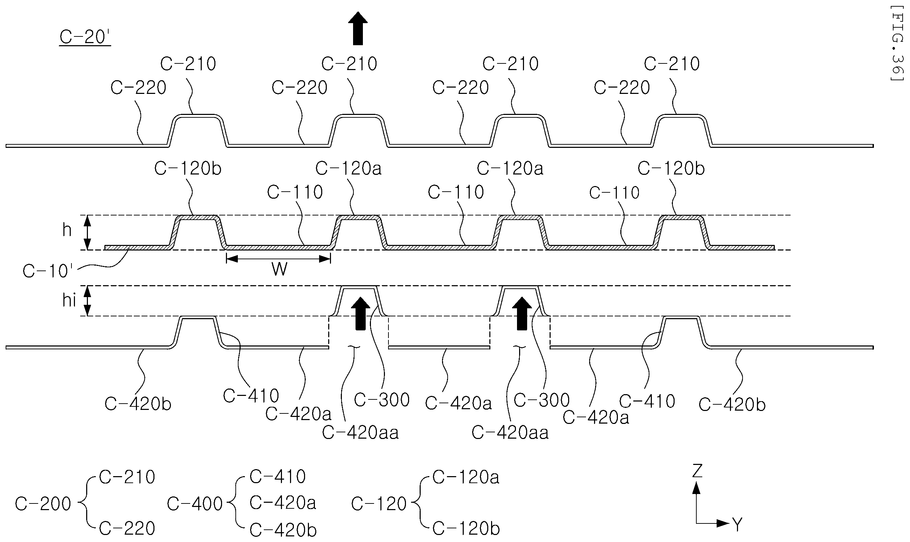

FIG. 36 schematically illustrates a fourth process of manufacturing the press formed part of FIG. 25.

Best Mode for Invention

Technical terms used herein are only for mentioning specific example embodiments rather than limiting the present disclosure. In addition, a singular form used herein includes a plural form also, unless the phrases have a clearly opposite meaning thereto.

The meaning of "comprising" used in the specification embodies specific characteristics, domains, integers, steps, actions, elements, and/or components, and does not exclude the presence or addition of other specific characteristics, domains, integers, steps, actions, elements, and/or components.

Unless otherwise defined, all terms including technical terms and scientific terms used herein have the same meaning as commonly understood by a person with ordinary skill in the art to which the present disclosure pertains. The commonly used terms defined in the dictionary is construed as having the meaning consistent with the related technical literature and the current disclosure, and are not construed as having ideal or very formal meaning unless otherwise defined.

In addition, in the present disclosure, a steel sheet refers to a coil or sheet state having not yet been worked into a specific shape, and a member refers to being worked into a non-sheet shape by a forming process. In addition, a plating layer referred to in the present disclosure refers to a layer of a metal, an alloy, or an intermetallic compound formed in contact with a base steel sheet.

In the present disclosure, when the content of each element is represented, it needs to be noted that it is based on a weight, unless otherwise particularly defined. In addition, the ratio of crystal or structure is based on an area, unless otherwise particularly expressed, and also the content of gas is based on a volume, unless otherwise particularly expressed.

Hereinafter, the present disclosure will be described in detail.

The inventors of the present disclosure found that in providing a plated steel sheet having an aluminum-based plating layer as a plated steel sheet for hot press forming, in the case of controlling the surface characteristics of the plating layer, unlike the general case of controlling the roughness of the surface, particularly when Rt showing a maximum roughness of the surface of the plating layer the number of peaks per unit length (RPc, peaks/cm) are controlled, it is effective for improving high-temperature formability of the plated steel sheet for hot forming.

First, the plated steel sheet for hot press forming according to a first aspect of the present disclosure may include a base steel sheet; and an aluminum-based plating layer on one or both surfaces of the base steel sheet.

According to an example embodiment of the present disclosure, in order to improve formability during heating at a high temperature for hot press forming of the plated steel sheet for hot press forming, a rougher surface of the plating layer was intended to be secured. A higher maximum roughness (Rt) value of the surface of the plating layer means a rougher surface, in which the maximum roughness (Rt) of the surface of the plating layer means a distance between a peak and a valley.

To this end, in an example embodiment of the present disclosure, the Rt value of the plating layer may be 4,0 to 25.0 μm. When the Rt value of the plating layer is less than 4.0 μm, an area of fraction between the plating layer and a mold is increased during the hot forming of the plated steel sheet, thereby deteriorating high-temperature formability. However, when the Rt value of the plating layer is more than 25.0 μm, the plating layer at the peak may be incompletely alloyed during heating to a high temperature for hot forming, and also the plating layer is easily destroyed by the fraction with the mold during hot forming, resulting in mold burn-on.

In addition, in an example embodiment of the present disclosure, the value of the number of peaks per unit length (RPc) of the plating layer may be 30 to 90 peaks/cm. When the RPc value is less than 30 peaks/cm, there is a concern that plating adhesion may be deteriorated. However, when the RPc value is more than 90 peaks/cm, a contact area with the mold during hot forming is increased to increase high-temperature friction coefficient, and thus, cracks occur in a hot forming process, or plating layer peeling off becomes excessive.

Meanwhile, the inventors of the present disclosure repeated in-depth research on the conditions for improving high-temperature formability of the plated steel sheet for hot press forming, and as a result, found that the goal may be achieved by controlling the relationship between a plating layer deposition amount and the Rt value of the surface of the plating layer. That is, corrosion resistance is secured by forming a plating layer having a certain thickness from an

appropriate deposition amount, and the fraction characteristics of the plating layer are improved to increase formability in the high-temperature forming process. Also, in order to secure a surface appearance in a final product, that is, a hot formed member, a relationship between the deposition amount of the plating layer and the maximum roughness (Rt) of the surface of the plating layer has been redefined.

In an example embodiment of the present disclosure, the relationship between the deposition amount of the plating layer and the Rt value of the surface of the plating layer is defined by the following Relation 1, and the surface of the plating layer according to an example embodiment of the present disclosure may satisfy the following Relation 1. Herein, the deposition amount of the plating layer is based on one surface.

[Relation 1]

$$27.0 \leq (Ⓒ/3)+(Rt/2) \leq 38.0$$

wherein the unit of Relation 1 is μm, and Ⓒ is a plating deposition amount.

The value of Relation 1 being less than 27.0 may be the case in which the plating deposition amount is large, but the Rt value is low, and in this case, a contact area between the steel sheet and the mold during hot forming is large, so that there is a concern that hot formability may be deteriorated by the increased high-temperature friction coefficient. In addition, it may be the case in which the Rt value is high, but the plating deposition amount is small, and in this case, the corrosion resistance of the hot formed member may be deteriorated by the too thinned plating layer.

The value of Relation 1 being more than 38.0 may be the case in which the plating deposition amount is appropriate, but the Rt value is excessively high, and in this case, there is a possibility of incomplete alloying of the plating layer at the peak during heating to high temperature for hot forming, and also the plating layer may be easily destroyed by friction with a mold during hot forming to cause burning on the mold. In addition, it may be the case in which the Rt value is low, but the plating deposition amount is excessively high, and in this case, an unalloyed Al plating layer is attached to a roll in a heating furnace during heating to a high temperature for hot forming, which may cause a problem such as plating layer peeling off from the steel sheet.

When the hot forming is performed in order to obtain a hot formed member using the plated steel sheet for hot press forming according to an example embodiment of the present disclosure having the characteristics described above, a contact area between the steel sheet and the mold may be decreased, and improvement of formability in the high-temperature forming process may be promoted therefrom.

The characteristics described above, that is, the characteristics of the plating layer will be described based on the plating layer formed on one surface of the base steel sheet. Meanwhile, when the plating layer is formed on both surfaces of the base steel sheet, the both surfaces of the plating layer may have the characteristics of the plating layer described above. This may be identically applied also to the plating layer of the hot press-formed member described later.

Since the base steel sheet according to an example embodiment of the present disclosure may be any steel sheet used in the hot press forming, as a steel sheet for hot press forming, its composition is not particularly limited.

However, as a non-limiting example, the base steel sheet may include, by weight: 0.02 to 0.60% of carbon (C), 0.001 to 2.000% of silicon (Si), 0.001 to 1.000% of aluminum (Al), 0.1 to 4.0% of manganese (Mn), 0.050% or less of phosphorus (P), 0.0200% or less of sulfur (S), 0.0200% or less of nitrogen (N), 0 to 1.0000% of titanium (Ti), 0 to 1.0000% of niobium (Ni), 0 to 1.0000% of vanadium (V), 0 to 0.0100% of boron (B), 0 to 1.00% of chromium (Cr), 0 to 1.00% of molybdenum (Mo), 0 to 1.00% of tungsten (W), 0 to 1.0% of copper (Cu), 0 to 1.0% of nickel (Ni), 0 to 1.00% of antimony (Sb), 0 to 1.00% of tin (Sn), 0 to 0.10% of calcium (Ca), 0 to 0.10% of magnesium (Mg), 0 to 1.00% of cobalt (Co), 0 to 1.00% of arsenic (As), 0 to 1.00% of zirconium (Zr), 0 to 1.00% of bismuth (Bi), 0 to 0.3% of rare earth elements (REM), a remainder of Fe, and unavoidable impurities.

Among the alloy composition described above, C, Mn, and the like may be added for securing steel strength, Si is effective for decreasing segregation of Mn and the like in the base steel sheet as well as a deoxidation effect, and Al has a deoxidation effect. P, S, N, and the like may be elements which are unavoidably introduced in a steel manufacturing process, but the present disclosure is not limited thereto. In addition to them, considering the target physical properties of the final product, it is evident to a person with ordinary skill in the art to which the present disclosure pertains that Ti, B, Cu, Mo, Cr, Ni, V, Ca, Nb, Sn, W, Sb, Mg, Co, As, Zr, Bi, REM, and the like may be further included in addition to the composition described above.

Hereinafter, the alloy composition of the base steel sheet according to an example embodiment of the present disclosure will be described in more detail.

Carbon (C): 0.02 to 0.60%

Carbon (C) is an essential element for increasing strength of a hot formed member and may be included in an

appropriate amount. In an example embodiment of the present disclosure, when the content of C is less than 0.02%, a target level of strength may not be secured. However, when the content is more than 0.60%, the strength of a hot-rolled material obtained before cold rolling in the case of producing a cold rolled material is too high, and thus, there is a concern that rollability during cold rolling of the hot-rolled material is greatly deteriorated, and point weldability is greatly reduced. Therefore, in an example embodiment of the present disclosure, C may be included at 0.02 to 0.60%. According to another example embodiment of the present disclosure, C may be included at 0.55% or less, and according to another example embodiment, at 0.50% or less.

Silicon (Si): 0.001 to 2.000%

Silicon (Si) may be added as a deoxidizer in a steel making process, and has an effect of suppressing production of a carbide in a hot formed member. In an example embodiment of the present disclosure, Si may be included at 0.001% or more in order to obtain the effect described above. However, when the content is more than 2.000%, there is a concern that platability may be deteriorated by excessive formation of an Si oxide during plating of the base steel sheet. Therefore, in an example embodiment of the present disclosure, Si may be included at 0.001 to 2.000%. According to another example embodiment, Si may be included at 0.010% or more, and according to another example embodiment, Si may be included at 1.500% or less.

Aluminum (Al): 0.001 to 1.000%

Aluminum (Al) may be added as a deoxidizer in a steel making process, similarly to Si, and has an effect of suppressing production of a carbide in a hot formed member. In an example embodiment of the present disclosure, Al may be included at 0.001% or more in order to obtain the effect described above. However, when the content is more than 1.000%, there is a concern that platability may be deteriorated by excessive formation of an Al oxide during plating of the base steel sheet. In addition, in terms of suppressing an excessive rise in temperature during a high-temperature heat treatment for hot forming, the content of Al may be 1.000% or less. Therefore, in an example embodiment of the present disclosure, Al may be included at 0.001 to 1.000%. According to another example embodiment, Al may be included at 0.005% or more, and according to another example embodiment, Al may be included at 0.900% or less.

Manganese (Mn): 0.1 to 4.0%

Manganese (Mn) may be added in order to lower a critical cooling rate for securing a martensite phase during manufacture of a hot formed member as well as a solid solution strengthening effect. In an example embodiment of the present disclosure, Mn may be included at 0.1% or more in terms of sufficiently obtaining the effect described above. However, when the content is more than 4.0%, the strength of a hot-rolled material is excessively increased, so that there is a concern that cold rollability is reduced during subsequent cold rolling, and point weldability may be deteriorated. Therefore, in an example embodiment of the present disclosure, Mn may be included at 0.1 to 4.0%. According to another example embodiment of the present disclosure, Mn may be included at 3.5% or less, and according to another example embodiment, Mn may be included at 3.0% or less.

Phosphorus (P): 0.050% or less

Phosphorus (P) is an element which is unavoidably added in the steel making process, and it is favorable to control the content as low as possible. In an example embodiment of the present disclosure, when the content of P is 0.050% or less, there is no problem in securing the intended physical properties, and thus, the upper limit may be limited to 0.050%. According to another example embodiment of the present disclosure, P may be included at 0.040% or less or 0.030% or less. Meanwhile, when the content of P in the steel may be excessively lowered, there is a concern that manufacturing costs may be greatly increased, and thus, considering the fact, the content may be limited to 0.001% or more.

Sulfur (S): 0.0200% or less

Sulfur (S) is an element which is unavoidably added in the steel manufacturing process, and when the content is excessive, bendability, impact properties, weldability, and the like of the hot formed member may be impaired. Thus, in an example embodiment of the present disclosure, the content of S may be limited to 0.0200% or less. However, when the content of S in the steel is excessively lowered, there is a concern that manufacturing costs may be greatly increased, and thus, considering the fact, the content may be limited to 0.0001% or more.

Nitrogen (N): 0.0200% or less

Nitrogen (N) is an element which is unavoidably added element in the steel making process, and when the content is excessive, sensitivity to crack occurrence during slab continuous casting is increased, and impact characteristics of the hot formed member may be deteriorated. Thus, in an example embodiment of the present disclosure, the content of N may be limited to 0.0200% or less. However, when the content of S in the steel is excessively lowered, there is a concern that manufacturing costs may be greatly increased, and thus, considering the fact, the content may be limited to 0.0001% or more.

Titanium (Ti): 0 to 1.0000%, niobium (Nb): 0 to 1.0000%, and vanadium (V): 0 to 1.0000%

Titanium (Ti), niobium (Nb), and vanadium (V) are bonded to N in the steel to produce a nitride, thereby suppressing formation of a nitride (BN) by boron, and improvement of hardenability of steel may be promoted therefrom. In addition, due to the formation of fine precipitates, it has an effect of improving hydrogen embrittlement resistance by crystal grain refinement. In an example embodiment of the present disclosure, when the contents of Ti, Nb, and V are more than 1.0000%, respectively, the effects described above are saturated, and rather, an increase in manufacturing costs may be caused. In an example embodiment of the present disclosure, Ti, Nb, and V are not necessarily added. However, in order to obtain the effects described above, the elements may be included at 0.0001% or more when added.

Boron (B): 0 to 0.0100%

Boron (B) may improve the hardenability of steel only with a small amount of addition and also is segregated in an old austenite crystal grain boundary, and thus, is effective for suppressing brittleness of a hot press-formed member by grain boundary segregation of P and/or S. In an example embodiment of the present disclosure, when the content of B is more than 0.0100%, there is a concern that the effect by the addition of B is saturated, and brittleness may occur in a hot rolling process. Therefore, in an example embodiment of the present disclosure, B may be included at 0.0100% or less. In another example embodiment of the present disclosure, B may be included at 0.0080% or less or 0.0050% or less. In an example embodiment of the present disclosure, though B is not necessarily added, when B is added in order to obtain the effects described above, it may be included at 0.0001% or more.

Chromium (Cr): 0 to 1.00%, molybdenum (Mo): 0 to 1.00%, and tungsten (W); 0 to 1.00%

Chromium (Cr), molybdenum (Mo), and tungsten (W) may be selectively added for strength improvement and crystal grain refinement through improvement of steel hardenability and a precipitation reinforcement effect. In an example embodiment of the present disclosure, when the content of each element is more than 1.00%, the effect is saturated, and an increase in manufacturing costs may be caused.

Copper (Cu): 0 to 1.0% and nickel (Ni): 0 to 1.0%

Since copper (Cu) forms fine precipitates in steel to improve strength, it may be added in order to obtain the effect. When Cu is added alone, hot brittleness may occur, and thus, in order to prevent this, nickel (Ni) may be added together, if necessary. In an example embodiment of the present disclosure, when the contents of Cu and Ni are more than 1.0%, respectively, manufacturing costs may be greatly increased.

Antimony (Sb): 0 to 1.00% and tin (Sn): 0 to 1.00%

Antimony (Sb) and tin (Sn) serve to suppress production of an oxide which may be produced in surface layer crystal grains, in the hot rolled material of a steel to which Si and/or Al is/are added. That is, in order to suppress dent defects by the oxide produced in the hot rolled material surface layer crystal grain boundary during annealing of the cold rolled material, Sb and Sn may be optionally added. In an example embodiment of the present disclosure, when the contents of Sb and Sn are more than 1.00%, respectively, manufacturing costs are greatly increased, and also Sb and Sn are solid solubilized in a grain boundary in a slab state, thereby causing edge cracks of coil during subsequent hot rolling. Therefore, according to an example embodiment of the present disclosure, Sn and Sb may be limited to 1.00% or less, respectively, when added.

Calcium (Ca): 0 to 0.10%, magnesium (Mg): 0 to 0.10%, cobalt (Co): 0 to 1.00%, arsenic (As): 0 to 1.00%, zirconium (Zr): 0 to 1.00%, and bismuth (Bi): 0 to 1.00%

In an example embodiment of the present disclosure, the elements described above may be further included considering the target physical properties of a final product, and when the contents of Ca and Mg are more than 0.10%, respectively, if added, and the contents of Co, As, Zr, and Bi are more than 1.00%, respectively, if added, manufacturing costs are greatly increased, and thus, the content of each element may be limited.

Rare earth elements (REM): 0 to 0.3%

Since rare earth element (REM) serves to control Fe activity in steel, it may be optionally added in order to control the thickness of Fe scale formed on the surface layer of a steel sheet during hot forming. In an example embodiment of the present disclosure, when the content of REM is more than 0.3%, the controllability of Fe activity may be rather lost to deteriorate surface quality. Therefore, according to an example embodiment of the present disclosure, REM may be limited to 0.3% or less, when added.

The present disclosure is intended to provide a plated steel sheet for hot press forming and may include a plating layer on one or both surfaces of the base steel sheet described above, in which the plating layer may be an aluminum-based plating layer.

In an example embodiment of the present disclosure, the aluminum-based plating layer formed on at least one surface of the base steel sheet may be a plating layer containing aluminum (Al) as a main element. As an example, the aluminum-based plating layer may include, by weight: 5.0 to 11.0% of silicon (Si), 10.0% or less of iron (Fe), a remainder of aluminum (Al), and unavoidable impurities. Though it will be described in detail later, the aluminum-based plating layer may be formed by immersing a base steel sheet in an aluminum-based hot dip coating bath, and it is well known that the composition of the aluminum-based plating layer is determined by the composition in the aluminum-based hot dip coating bath.

Silicon (Si) in the aluminum plating layer serves to lower the melting point of the plating bath, and also prevent excessive alloying during heating to a high temperature for hot forming. Thus, Si may be included at 5.0% or more. However, when the content is more than 11.0%, there is a concern that the melting point of the plating bath may rapidly rise, and in this case, an amount of ash produced in the plating bath may rapidly increase.

The iron (Fe) is an impurity in the plating bath and may be present within about 4.0%. In addition, since Fe present in the base steel sheet is eluted into the plating layer in the plating process, it is an element included in the aluminum-based plating layer. Thus, 10.0% or less of Fe may be included in the aluminum-based plating layer. When the content of Fe in the aluminum-based plating layer is more than 10.0%, an Al-Fe alloy phase is excessively formed, so that a possibility of the plating layer being peeled off is increased.

According to an example of the present disclosure, the aluminum-based plating layer may further include common elements included in the plating layer, in addition to the components described above. An example of the elements may include one or two or more selected from Mg, Mn, Cr, Cu, Mo, Ni, Sb, Sn, Ti, Ca, and Sr.

Hereinafter, a method for manufacturing a plated steel sheet for hot press forming according to another aspect of the present disclosure will be described in detail. However, the following method for manufacturing a plated steel sheet is an example, and it should be noted that the plated steel sheet of the present disclosure is not necessarily manufactured by the manufacturing method, and there is no problem in using any manufacturing method for implementing each example embodiment of the present disclosure as long as it is a method meeting the claims of the present disclosure.

According to an example embodiment of the present disclosure, a plated steel sheet for hot press forming may be obtained by a process including: preparing a base steel sheet; forming an aluminum-based plating layer on one or both surfaces of the base steel sheet to obtain a plated steel sheet; and temper rolling the plated steel sheet.

In an example embodiment of the present disclosure, since the base steel sheet for obtaining the plated steel sheet for hot press forming may be the base steel sheet mentioned above, its composition is not particularly limited, and its description is redisposed with the above description.

According to an example embodiment of the present disclosure, the plating layer may be formed on one or both surfaces of the base steel sheet by loading a base steel sheet into hot dip coating equipment and performing a hot dip coating treatment. As an example, when an aluminum-based plating layer is formed as the plating layer, the hot dip coating treatment may be a hot-dip aluminum plating method by performing plating by immersing a base steel sheet in a hot-dip aluminum plating bath. Herein, a temperature of the hot-dip aluminum plating bath may be a common temperature range of aluminum plating, and as a non-limiting example, may be in a range of 620 to 680°C.

In an example embodiment of the present disclosure, the hot-dip aluminum plating bath is a plating bath including aluminum (Al) as a main component, and as an example, silicon (Si) may be included at 5.0 to 11.0 wt% in the plating bath. As such, effects of flowability of hot-dip metal and suppression of diffusion of Al into the base steel sheet during plating may be obtained by adding Si.

As another example, iron (Fe) may be included at 4.0% or less, in addition to Si, and additionally, one or two or more selected from Mg, Mn, Cr, Cu, Mo, Ni, Sb, Sn, Ti, Ca, and Sr may be further included.

In an example embodiment of the present disclosure, a plating amount in plating hot-dip aluminum may be 60 to 100 $g/m^2$ based on one surface. When the plating amount is less than 60 $g/m^2$, there is a concern that corrosion resistance may be decreased, and when the plating amount is more than 100 $g/m^2$, there is a concern that weldability is reduced, and unalloyed Al may be often burned on a roll in a heating furnace during heating to a high temperature for hot forming.

In addition, in an example embodiment of the present disclosure, an alloying heat treatment may be further performed after performing the aluminum plating. Though alloying heat treatment is not particularly limited, it may be performed by on-line heating of heating the plated steel sheet (hot-dip aluminum plated steel sheet) obtained by the hot-dip aluminum plating while it is running. When the alloying heat treatment is performed by the on-line heating described above, as an example, a heating temperature range may be 670 to 900°C, and a retention time may be 1 to 20 seconds. As such, the plated steel sheet having been further treated with alloying may be referred to as an alloyed hot-dip aluminum plated steel sheet.

In an example embodiment of the present disclosure, the plated steel sheet on which an aluminum-based plating layer is formed may be temper rolled.

In an example embodiment of the present disclosure, the temper rolling of the plated steel sheet may be performed using a roll having a surface of Ra: 2.0 to 8.0 μm and RPc: 46 to 120 peaks/cm with a pressing force of 100 to 500 tons. That is, during the temper rolling of the plated steel sheet, the conditions of a roll surface and the pressing force are the conditions capable of controlling the surface condition of the aluminum-based plated steel sheet according to an example embodiment of the present disclosure, and Rt and RPc of the plated steel sheet may be affected by not only Ra and RPc of the roll surface during temper rolling, but also the pressing force applied by the roll.

That is to say, in the surface of the plating layer of the plated steel sheet for hot press forming according to an example embodiment of the present disclosure, in order for Rt and RPc values to have sufficient values and satisfy the above Relation 1, the Ra value of the roll surface during temper rolling may be limited to a range of 2.0 to 8.0 μm, and the RPc value may be limited to a range of 46 to 120 peaks/cm. In addition, when the temper rolling is performed using the roll having the surface as such, rolling may be performed with a pressing force of 100 to 500 ton.

Hereinafter, the hot press-formed member according to another aspect of the present disclosure and a manufacturing method thereof will be described.

In an example embodiment of the present disclosure, the hot press-formed member may be obtained by hot press forming a steel sheet for hot press forming, and the steel sheet for hot press forming herein may be the one according to an example embodiment of the present disclosure.

The steel sheet for hot press forming according to an example embodiment of the present disclosure includes a base steel sheet and an aluminum-based plating layer on at least one surface of the base steel sheet, and the aluminum-based plating layer may have characteristics of controlled Rt and RPc of the surface. The hot press-formed member obtained from the steel sheet for hot press forming may also have Rt and RPc of the surface of the plating layer controlled to a specific range.

In an example embodiment of the present disclosure, the surface of the plating layer of the hot press-formed member may have a maximum roughness (Rt) of 6.0 to 26.0 μm. In addition, the surface of the plating layer of the hot press-formed member according to an example embodiment of the present disclosure may have RPc (peak/cm) of 60 to 130 peaks/cm, the RPc representing the number of peaks per unit length (peak count). The hot press-formed member having the controlled plating layer on the surface as such may have excellent paint adhesion and friction characteristics.

When the surface of the plating layer of the hot press-formed member according to an example embodiment of the present disclosure has the Rt value of less than 6.0 μm or the RPc value of less than 60 peaks/cm, it may be difficult to expect sufficient plating adhesion. However, the surface of the plating layer of the hot press-formed member having the Rt value of more than 26.0 μm or the RPc value of more than 130 peaks/cm means that the Rt and RPc values of the surface of the plating layer of the steel sheet for hot press forming are excessively high. In this case, since the plating layer is easily destroyed by fraction with a mold in the hot forming process, mold burn-on may be caused by adhesive wear.

Meanwhile, the inventors of the present disclosure repeated in-depth research on the conditions for improving the paint adhesion and friction characteristics of the hot press-formed member. As a result, it was found that the goal may be achieved by controlling the relationship between the thickness of the plating layer and the Rt value of the surface of the plating layer of the hot press-formed member. In particular, the inventors of the present disclosure found that the thickness of the plating layer and the roughness of the surface of the plating layer of the hot press-formed member may affect securing physical properties such as surface appearance together with the plating adhesion of the hot press-formed member obtained by forming at a high temperature. Thus, the relationship between the thickness and the maximum roughness (Rt) of the plating layer of the hot press-formed member was newly defined. This will be described in detail below.

According to an example embodiment of the present disclosure, the surface of the plating layer of the hot press-formed member may satisfy the following Relation 2:

[Relation 2]

$$40.0 \leq T + (Rt/2) \leq 57.0$$

wherein the unit of Relation 2 is μm, and T is the thickness of the plating layer.

When the value of Relation 2 is less than 40.0, the plating adhesion of the hot press-formed member may be deteriorated. However, when the value is more than 57.0, the plating layer is already destroyed by fraction with the mold in the hot forming process to cause occurrence of mold burn-on by adhesive wear.

In an example embodiment of the present disclosure, the thickness (T) of the plating layer of the hot press-formed member representing T in Relation 2 may be in a range of 30.0 to 50.0 μm. Herein, the thickness range is based on one surface. When the thickness of the plating layer of the hot press-formed member is less than 30.0 μm, corrosion resistance may be deteriorated. In addition, the Rt value should be excessively increased in order to satisfy Relation 2, and this causes plating layer destruction by fraction with the mold in the hot forming process, resulting in mold burn-on by adhesive wear. However, when the thickness of the plating layer is more than 50.0 μm, it is favorable for corrosion resistance improvement, but it is difficult to completely alloy the plating layer within a predetermined heat treatment time, which reduces productivity. In addition, there is a problem that occurrence of Al burned on a roll in a heating furnace becomes easy.

As such, the hot press-formed member having surface characteristics controlled according to an example embodiment of the present disclosure has excellent friction characteristics, and as an example, the hot press-formed member may have a characteristic of a friction coefficient of 0.50 or less.

In an example embodiment of the present disclosure, the aluminum-based plating layer of the hot press-formed member may be a plating layer formed of an Al-Fe alloy having the sum of the contents of Al and Fe of 89% or more (including 100%), by alloying in the high-temperature heating process for hot press forming.

In an example embodiment of the present disclosure, the base steel sheet of the hot press-formed member may have a hard structure by performing forming after a high-temperature heat treatment. As an example, the base steel sheet may have a microstructure having an area fraction of 90% or more by combining martensite and bainite phases, and may include pearlite, ferrite, and the like as other structures.

Meanwhile, the method for manufacturing a hot press-formed member according to an example embodiment of the present disclosure is not particularly limited, and as well-known in the art, the hot press-formed member may be manufactured by heating a steel sheet for hot press forming to a temperature at or higher than an austenitizing temperature, maintaining the temperature, and then quenching and forming at the same time.

However, as an example of the present disclosure, the plated steel sheet for hot press forming according to an example embodiment of the present disclosure may be used to obtain a blank, and the blank may be heated to a temperature range of 860 to 970°C and then maintained for 3 to 15 minutes. After hot press forming the blank which is heated and maintained as such, cooling at a cooling rate of a critical cooling rate or more may be performed to manufacture an intended hot press-formed member. As a non-limiting example, the cooling may be performed at a cooling rate of 30°C/s or more.

Hereinafter, a forming device according to the second aspect of the present disclosure and a forming method using the same will be described.

According to an example embodiment of the present disclosure, a battery case bracket having not been formed with a conventional high-strength steel may be formed by a device and a method for forming a bracket having a curved portion and also a flange with a high-strength steel material, and by forming the battery case bracket formed thereby.

In an example embodiment of the present disclosure, the high-strength steel material may be the plated steel sheet for hot press forming described above and may have the alloy composition described above. In addition, the material may be manufactured by the manufacturing methods described above.

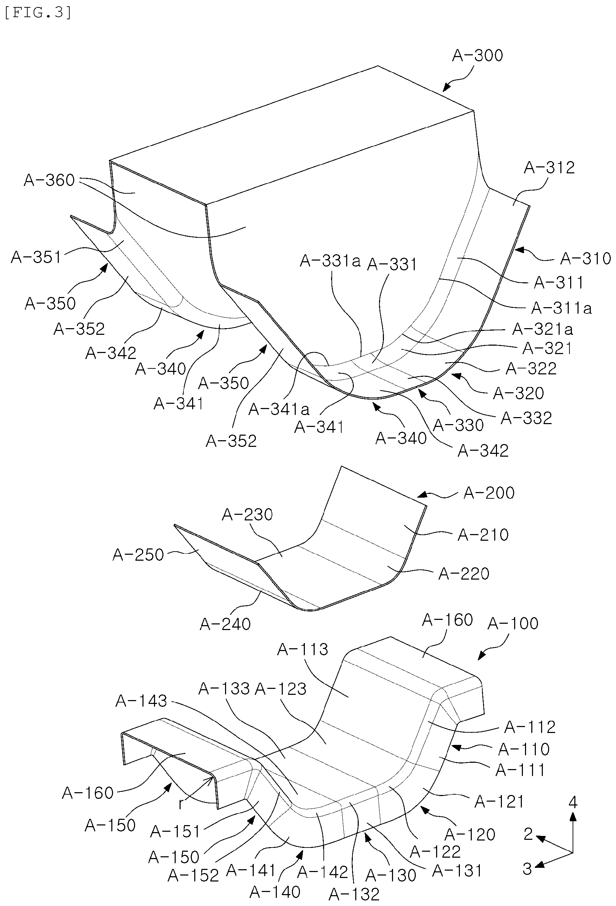

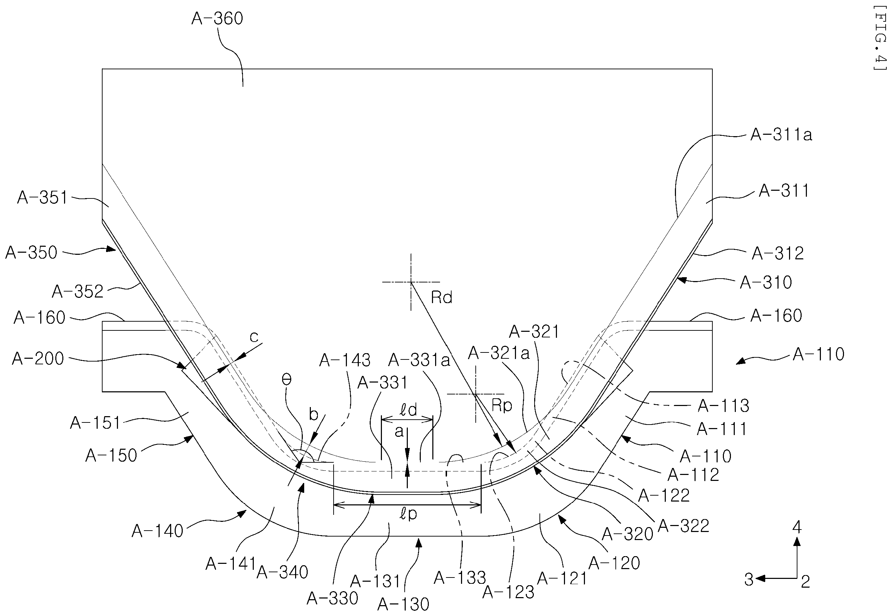

FIGS. 3 and 4 illustrate the forming device according to an example embodiment of the present disclosure. Specifically, FIG. 3 illustrates an exploded perspective view of the forming device according to an example embodiment of the present disclosure, and FIG. 4 illustrates a side view of the forming device according to an example embodiment of the present disclosure. In this example embodiment, the forming device is illustrated with a focus on the exterior of the mold.

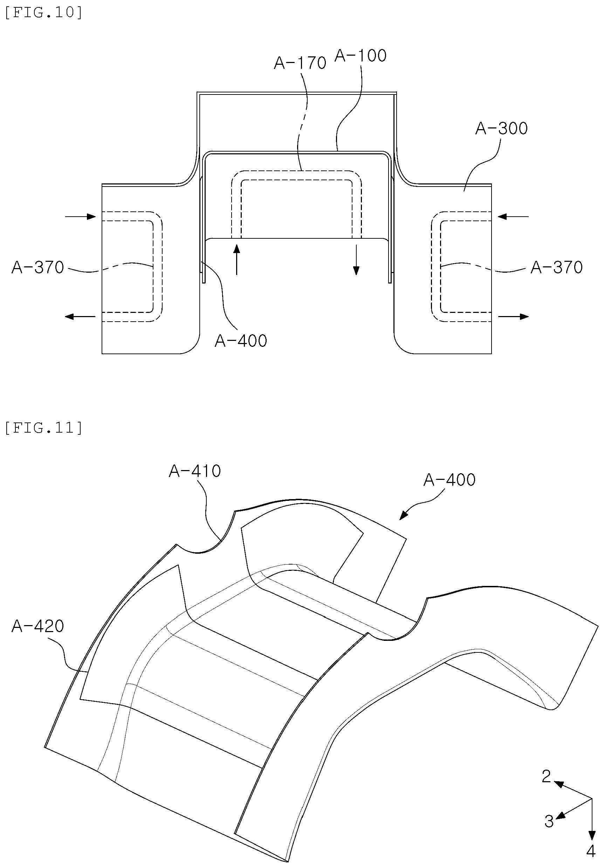

As shown in FIG. 3, the forming device according to an example embodiment of the present disclosure includes: a pad A-200; a die A-300 disposed in the outside in the first direction 2 of the pad A-200; and a punch A-100 which is disposed in the lower portion of the pad A-200 and includes a main body in which first to fifth punch forming parts A-120, A-130, A-140, A-150, and A-160 are formed. Though not shown in FIGS. 3 and 4, the forming device according to an example embodiment of the present disclosure is a hot press forming device, in which cooling channels A-170 and A-370 (see FIG. 10) in which cooling water flows are disposed inside the punch A-100 and the die A-300, thereby hardening the material through a heat treatment during forming or after forming.

The pad A-200 and the die A-300 are connected to an upper mold of the press, and the punch A-100 is connected to a lower mold of the press, so that the material is formed as the pad A-200 and the die A-300 move in a third direction 4

which is an up and down direction toward the punch A-100. Though not shown, the pad A-200 and the die A-300 are formed so that they may independently move or relative motion in an up and down direction may be performed. For example, a structure in which an elastic member is attached to the upper portion of the pad A-200, and after the pad A-200 and the die A-300 move together and forming of the pad A-200 is finished, only the die A-300 moves downward with respect to the pad A-200 by the elastic member may be applied.

The punch A-100 is formed with a structure of forming two brackets simultaneously. Therefore, two forming parts corresponding to the curved portion of the bracket are included. Specifically, the punch A-100 includes a linear first punch forming part A-110, a curved second punch forming part A-120 having a forming part curve curvature radius (Rp), a linear third punch forming part A-130, a curved fourth forming part A-140 having the forming part curve curvature radius (Rp), and a linear fifth punch forming part A-150 consecutively along a second direction 3 perpendicular to the first direction 2 on a horizontal plane, when viewed in the first direction 2, and a support part A-160 which supports a material before forming is disposed outside the first forming part and the fifth forming part A-150.

The first and fifth punch forming parts A-110 and A-150 has a structure which is tilted toward the third punch forming part A-130 overall, the third punch forming part A-130 has a structure parallel to the horizontal plane in the center, and the second and fourth punch forming parts A-120 and A-140 has a structure which connects the first and fifth punch forming parts A-110 and A-150 and the third punch forming part A-130 by curving.

The first and second punch forming parts A-110 and A-120 and the fourth and fifth punch forming parts A-140 and A-150 have a symmetrical structure around the third punch forming part A-130, and thus, one bracket is formed around the second punch forming part A-120 and another bracket is formed around the fourth punch forming part A-140.

The first punch forming part A-110 includes: a first extended surface forming part A-111 which is extended along the third direction 4 so that the flanges A-21 and A-23 (see FIG. 2) of the bracket A-20 (see FIG. 1) are formed on both sides in the first direction 2, a first main body forming part A-113 which forms the main body A-23 (see FIG. 2) of the bracket A-20 and is disposed in the lower portion of the pad A-200, and a first curved surface forming part A-112 having a bending curvature radius (r) between the first extended surface forming part A-111 and the first main body forming part A-113.

The second punch forming part A-120 and the third punch forming part A-130 also includes: second and third extended surface forming parts A-121 and A-131 which are extended along the third direction 4 so that the flanges A-21 and A-22 of the bracket A-20 are formed on both sides in the first direction 2, second and third main body forming parts A-123 and A-133 which form the main body A-23 of the bracket A-20 and is disposed in the lower portion of the pad A-200, and second and third curved surface forming parts A-122 and A-132 having the bending curvature radius (r) between the second extended surface forming part A-121 and the second main body forming part A-113 and between the third extended surface forming part A-131 and the third main body forming part A-133. Herein, the third main body forming part A-133 and the support part A-160 may be parallel to the horizontal plane.

Since the fourth and fifth punch forming parts A-140 and A-150 have the structure symmetrical to the first and second punch forming parts A-110 and A-120, the fourth and fifth punch forming parts A-140 and A-150 also include the fourth and fifth extended surface forming parts A-141 and A-151, the fourth and fifth curved surface forming parts A-142 and A-152, and the fourth and fifth main body forming parts A-143.

Meanwhile, the pad A-200 includes first to fifth pressurizing surfaces A-210, A-220, A-230, A-240, and A-250 having a shape corresponding to the first to fifth main body forming parts A-113, A-123, A-133, and A-143 of the punch A-100. The pad A-200 primarily forms a material so that it has a curved portion overall by pressurizing the material on the upper portion of the punch A-100. The pad A-200 may have a length between a length corresponding to the third main body forming part A-133 and the third extended surface forming part A-131 in the first direction 2.

The die A-300 is disposed on both sides in the first direction of the pad A-200, and has a structure forming the flanges A-21 and A-22. In the example embodiment, the die A-300 is disposed on both sides so that the flanges A-21 and A-22 are formed on both sides of the bracket A-20, but is not limited thereto, and may be disposed only on one side. Since the shapes of both sides of the die A-300 around the pad A-200 are symmetrical, description will focus on one side of the die A-300.

The die A-300 includes: a linear first die forming part A-310, a curved second die forming part A-320 having a die curve curvature radius (Rd), a linear third die forming part A-330, a curved fourth die forming part A-340 having the die curve curvature radius (Rd), and a linear fifth die forming part A-310 so that it corresponds to the first to fifth forming parts A-110, A-120, A-130, A-140, and A-150 of the punch A-100, when viewed in the first direction 2. The first to fifth die forming parts A-310, A-320, A-330, A-340, and A-350 are connected through a vertical plane A-360.

The first and second die forming parts A-310 and A-320 and the fourth and fifth die forming parts A-340 and A-350 in the die A-300 have a symmetrical structure around the third die forming part A-330, similarly to the punch A-100.

The first die forming part A-310 is adjacent to the punch A-100, and includes a first die curved surface forming part A-311 which is formed into a curved surface at a relatively close position to the punch A-100 in the first direction and a first plane forming part A-312 which is relatively far from the punch A-100.

Likewise, the second to fifth die forming parts A-320, A-330, A-340, and A-350 include second to fifth die curved surface forming parts A-321, A-331, A-341, and A-351 and second to fifth plane forming parts A-322, A-332, A-342, and

A-352. The curved surfaces of the first to fifth die curved surface forming parts A-311, A-321, A-331, A-341, and A-351 have a rising height as they are closer to the punch A-100.

In this example embodiment, the curve curvature radius (Rd) in the second to fourth die forming parts A-320 and A-340 refers to a curvature radius in the upper portions A-321a and A-341a closest to the punch A-100 in the second and fourth curved surface forming parts A-321 and A-341, when viewed in the first direction 2.

As seen in FIG. 4, in this example embodiment, the die A-100 is configured so that the first and fifth die forming parts A-310 and A-350 are first in contact with the material, and next the third die forming part A-330, and finally the second and fourth die forming parts A-320 and A-340 are formed, when forming the flange, by the sequential forming, stretching/contraction is performed in a state in which the material between the second and fourth die forming parts A320 and A-340 and the second and fourth punch forming parts A-120 and A-140 is secured, and thus, occurrence of wrinkles or tears in the forming process may be prevented.

Specifically, when the third main body forming part A-133 and an upper portion A-331a of the third die forming part A-330 are disposed on the same plane (a), the first main body forming part A-113 is disposed above an upper portion A-311a of the first die forming part A-310 (c), and the second main body forming part A-123 is disposed under an upper portion A-321a of the second die forming part A-320 (b), when viewed in the first direction 2. The relationship between the fourth and fifth die forming parts A-340 and A-350 and the fourth and fifth main body forming part A-143 and A-153 is the same.

That is, when the third die forming part A-330 starts to perform flange forming in the material, the first die forming part A-310 already performs flange forming, and the second die forming part A-320 which is a curved portion does not perform forming yet.

In this example embodiment, it is configured that the length (lp) of the third main body forming part A-133 is longer than the length (ld) of the third die forming part A-330, and the forming part curve curvature radius (Rp) of the second main body forming part A-123 is smaller than the die curve curvature radius (Rd) of the second die forming part A-320, thereby achieving the relationship described above.

Since the die curve curvature radius (Rd) is formed to be larger than the forming part curve curvature radius (Rp), the center of the die curve curvature radius (Rd) may be disposed in the center of the second direction 3 of the third die forming part A-330. Therefore, the centers of the die curve curvature radii of the second die forming part A-320 and the fourth die forming part A-340 may be disposed at the same position, but are not limited thereto.

Herein, when viewed in the first direction, an angle (θ) at which extended lines of imaginary tangents intersect at both ends in the fourth punch forming part A-143 may be 90° or more, or specifically 95 to 135°, and this is identical in the second punch forming part A-124, of course.

Meanwhile, the forming device according to an example embodiment of the present disclosure achieve the structure which is difficult to be achieved by press forming with a conventional high-strength steel of 1200 MPa or more, through hot press forming and the structure described above, and the forming part curve curvature radius (Rp) and the bending curvature radius (r) may satisfy 25 mm ≤ Rp (mm) + r (mm) ≤ 30 mm.

The bracket produced by the forming device may be used in the battery case as described above, and when the curvature radius in the battery case is large, a dead space may occur, and thus, the bending curvature radius (r) allowable for forming the flange in the battery case is substantially 10 mm or less. Meanwhile, when the bending curvature radius (r) is less than 3 mm, forming is difficult even with a hot press forming steel of 1200 MPa or more, and even when r is 3 mm, it is determined whether forming may be performed, depending on the forming part curve curvature radius (Rp). This will be described again, while describing the battery case bracket.

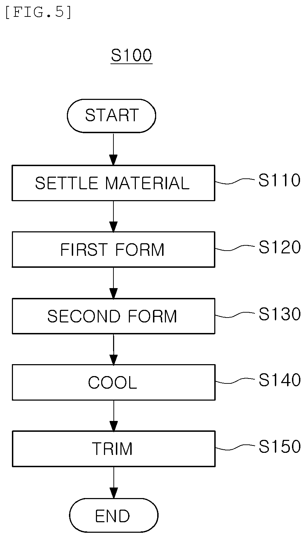

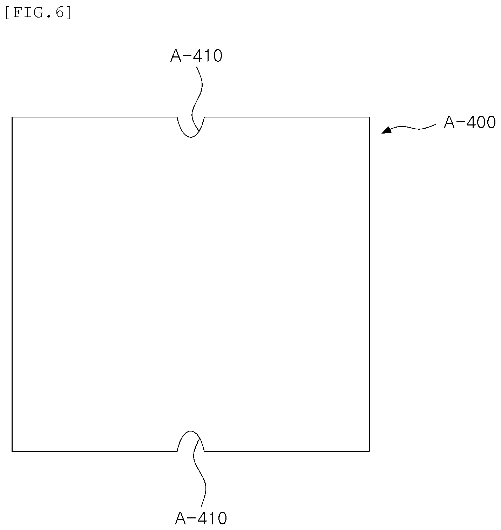

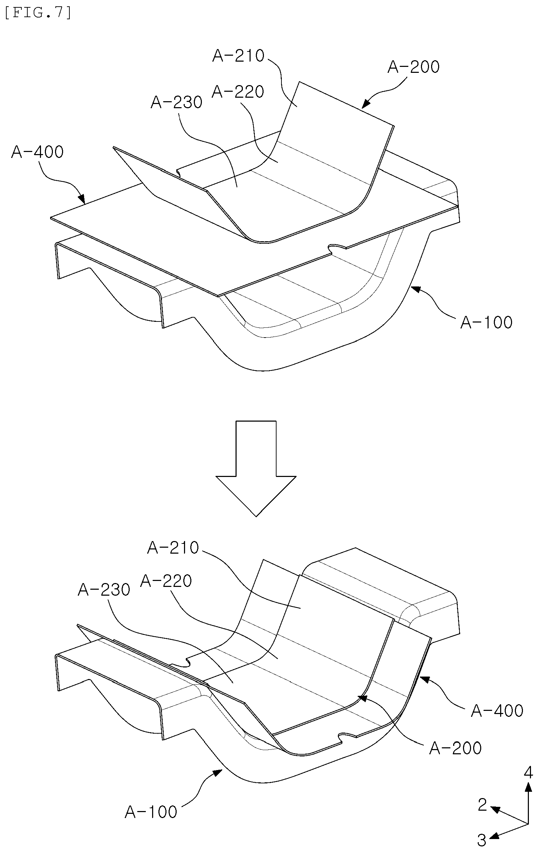

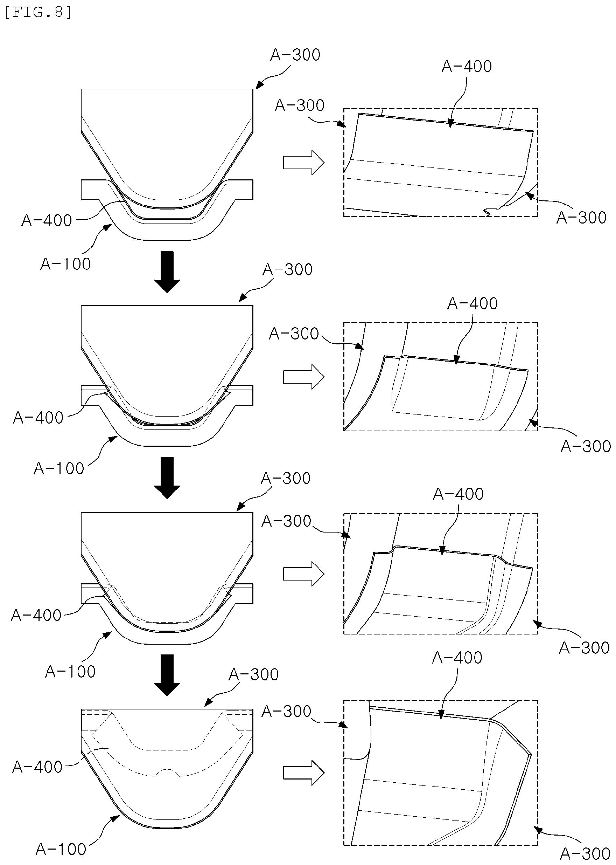

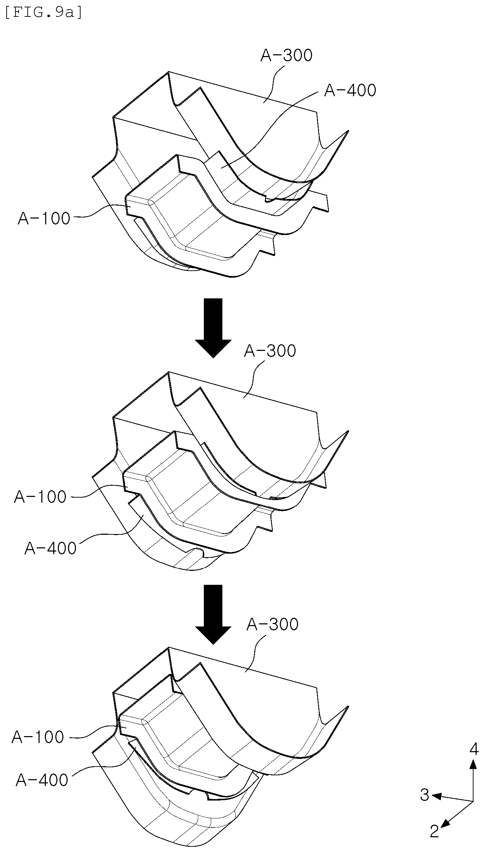

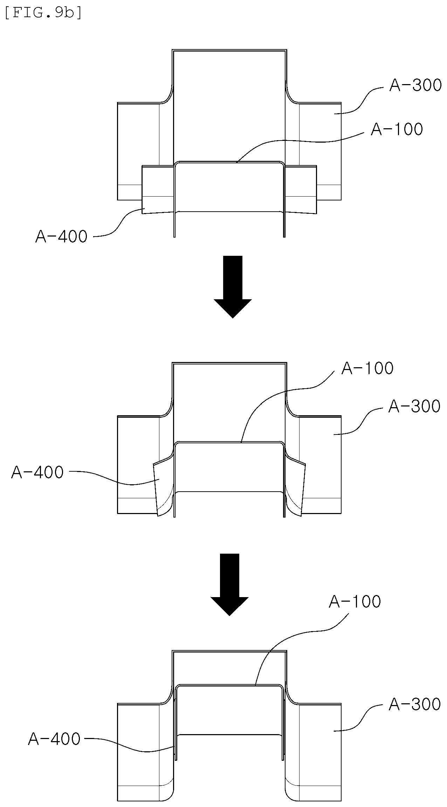

FIGS. 5 to 11 relate to the method for forming according to an example embodiment of the present disclosure, in which FIG. 5 is a flow chart of the forming method according to an example embodiment of the present disclosure, FIG. 6 is a plan view of the material added to the forming device according to an example embodiment of the present disclosure, FIG. 7 is a schematic perspective view showing a first forming process in the forming method according to an example embodiment of the present disclosure, FIGS. 8, 9a and 9b are a schematic perspective view, other perspective view and front view showing a second forming process in the forming method according to an example embodiment of the present disclosure, FIG. 10 is a front view showing a cooling process in the forming method according to an example embodiment of the present disclosure, and FIG. 11 is a perspective view showing a trimming process in the forming method according to an example embodiment of the present disclosure.

Since the forming method according to another aspect of the present disclosure may be performed by the forming device described above, it will be described also referring to FIG. 3.

The forming method according to an example embodiment of the present disclosure includes: a material settling process (S110) of settling a heated material A-400 which is longer than a punch A-100 having a forming part in a first direction 2 in the punch A-100; a first forming process (S120) of forming the material A-400 into shapes of main body forming parts A-113, A-123, A-133, and A-143 of the punch A-100 through a pad A-200 disposed on an upper portion of the punch A-100; a second forming process (S130) of forming the material so that the material A-400 follows a shape of the forming part of the punch A-100 through a die A-300 disposed on an outside of the pad A-200 in the first direction 2; a

cooling process (S140) of cooling the material so as to have a martensite structure by at least one of the punch and the die, and a trimming process (S150) of cutting the formed article after cooling into a bracket shape.

The material settling process (S110) is a process of adding the material into a forming device to settle the material in the punch A-100, in which the material is a steel sheet, and the material is settled in the punch A-100 in an austenite state, that is, in a state of being heated to a temperature at or higher than AC3 temperature of the material, so that a structure change may occur during or after forming. The material may be a hot press forming steel, for example, 22MnB5.

In an example embodiment of the present disclosure, the material may be the plated steel sheet for hot press forming described above, and may have the alloy composition described above.

In addition, the material A-400 includes a notch A-410 which is formed on both sides toward the center of the material in the center in the second direction 3 so that two brackets may be formed at once in the present disclosure. The notch A-410 prevents occurrence of cracks in an area other than the notch A-410 by concentrating a deformation range during forming.

As seen in FIG. 7, the first forming process (S120) is a process of curve forming the material A-400 through the pad A-200 after settling the material A-400, in which the material A-400 is pressurized onto the pad A-200 on the upper portion of the punch A-100 to form the material A-400.

As seen in FIGS. 8, 9a and 9b, the second forming process (S130) is a process of forming a flange in the curve formed material through the die A-300, and is a process of pressurizing a portion which is not in contact with the pad A-200 in the first formed material A-400 by the pad A-200, with die A-300 to deform the material. Herein, as described in FIG. 4, in the second forming process (S130), the die A-300 is formed in the order of the edge portion, the center portion, and the middle portion between the center and edge portions in the second direction 3, so that the curved portion of the first formed material A-400, that is, the second and fourth punch forming parts A120 and A-140 is finally formed, thereby forming the flange in the material A-400. Herein, the shapes of the forming parts of the punch A-100 and the die A-300 are as described through FIGS. 3 and 4.

The cooling process (S140) is a process of cooling the material A-400 during or after the forming, in which the material A-400 having an austenite structure is cooled by circulating a cooling fluid through cooling channels A-170 and A-370 formed in at least one of the punch and the die, thereby transforming the austenite structure into a martensite structure, so that the material A-400 becomes a high-strength steel having a tensile strength of 1200 MPa or more. In this example embodiment, the cooling channels A-170 and A-370 are formed in both the punch A-100 and the die A-300, and when the austenite structure may be transformed into the martensite structure, the cooling channels A-170 and A-370 may be provided in either one, and, if necessary, the cooling channels A-170 and A-370 may be provided also in the pad A-200.

When the cooling process (S140) is finished, the trimming process (S150) of cutting the material A-400 having been formed so that only the parts corresponding to two brackets remain along the cutting line A-420 is performed. Two brackets are cut around the second and fourth punch forming parts A-120 and A-140 of the punch A-140.

The forming method according to an example embodiment of the present disclosure may form the bracket having a curved portion and a flange with a high-strength steel. In addition, spring back occurring in the forming in the high-strength steel may be prevented by applying a hot press forming method, and forming errors, for example, wrinkle or thinning due to the flange forming in the curved portion may be prevented.

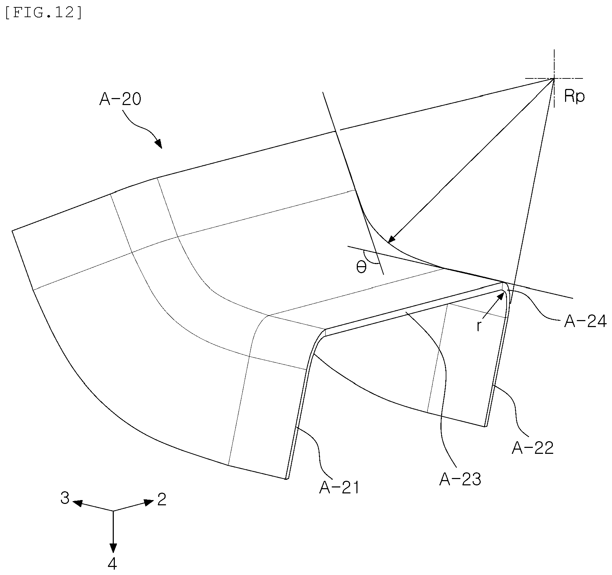

FIG. 12 is a perspective view of a bracket manufactured by the forming method according to an example embodiment of the present disclosure.

The bracket A-20 of FIG. 12 is curved with a forming part curve curvature radius (Rp) overall, while having a main body A-23 and flanges A-21 and A-22. Herein, the flanges A-21 and A-22 are connected to the main body A-23 with a curved surface A-24 curved with a bending curvature radius (r). The surface formed with the forming part curve curvature radius (Rp) in the main body A-23, the flanges A-21 and A-22, and the curved surface A-24 therebetween of the bracket A-20 may be referred to as a formed surface.

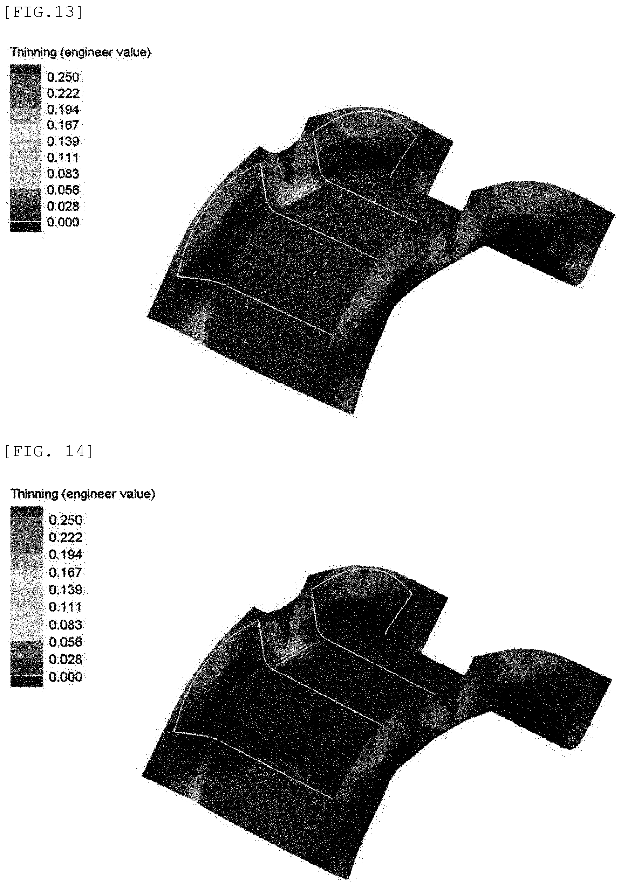

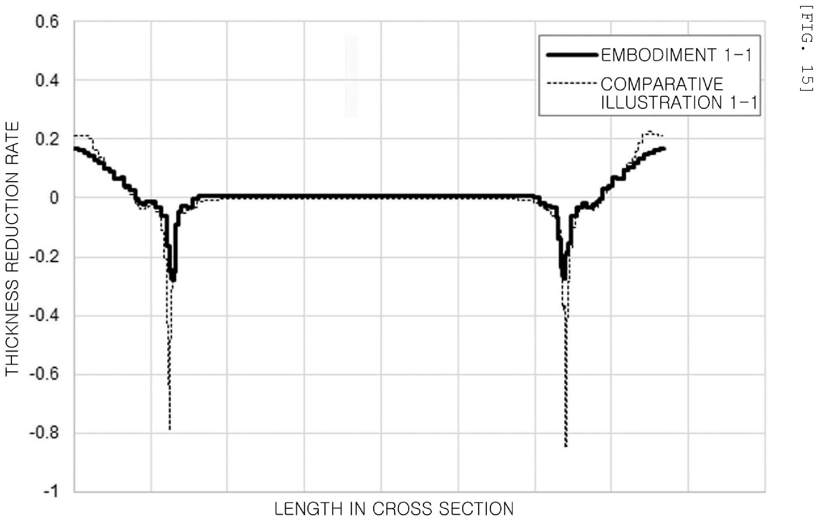

FIG. 13 illustrates a distribution chart of a thickness reduction rate of a formed article manufactured by the forming method according to an example embodiment of the present disclosure (Embodiment 1-1), FIG. 14 illustrates a distribution chart of a thickness reduction rate of Comparative Illustration 1-1 manufactured by another forming method, and FIG. 15 is a thickness reduction rate distribution graph in the cross sections of the formed articles of FIGS. 13 and 14.

The distribution chart of the thickness reduction rate is a drawing showing how the thickness of the material A-400 (see FIG. 6) changed after forming, and the thickness reduction rate is obtained by subtracting the thickness of the bracket A-20 at the corresponding position from the initial thickness (tnin) of the material A-400 and then dividing the value by the initial thickness (tnin). When the value is positive, it means that the material becomes thinner, and when negative, it means that the material becomes thicker.

The example of FIG. 13 was manufactured by the forming device of FIG. 3, and a heated material having a martensite structure was supplied to a 22MnB5 steel, the cooling rate was adjusted, and the tensile strength of the bracket was 1500 MPa. Herein, the thickness of the material was 1.2t, the bending curvature radius (r) was 5 mm, and the forming part curve curvature radius (Rp) was 22 mm.

As seen in FIGS. 13 and 15, since the thickness of the main body A-23 in the bracket A-20 is no different from the

initial thickness (tini), the average thickness (tav) of the main body A-23 of the bracket A-20 may be considered as the initial thickness (tini) of the material A-400, and the value obtained by subtracting the thickness at an individual position from the average thickness (tav) of the main body A-23 and then dividing the value by the average thickness (tav) may be considered as the thickness reduction rate.

Comparative Illustration 1-1 was formed by supplying a mart steel having a tensile strength of 1500 MPa as a material through the same forming device.

As seen in FIG. 15, it is confirmed that when the bracket was manufactured by the forming device and the forming method according to an example embodiment of the present disclosure (Embodiment 1-1), the thickness reduction rate of the portion having the maximum value of the thickness reduction rate, that is, having a minimum thickness value (tmin) was 0.2 or less, but in Comparative Illustration 1-1, the thickness reduction rate of the thinnest portion of the thickness was more than 0.2. When the thickness reduction rate is increased to more than 0.2, a height difference occurs in the flanges A-21 and A-22, so that sealability may be reduced when manufacturing a battery case.

In addition, as seen in FIG. 15, even when the bracket is curved and stretching is dominant, shrinkage occurs in a certain part, and when buckling occurs due to the shrinkage, material damage may occur. The bracket according to the forming method according to an example embodiment of the present disclosure did not have the thickness reduction rate of -0.3 or less even at the maximum thickness (tmax) position in the curved surface, and thus, was confirmed to be stably formed even in the curved portion.

However, in Comparative Illustration 1-1, it was found that the thickness reduction rate reaching -0.8 occurred in the maximum thickness (tmax) position to cause buckling occurrence in the corresponding part. The buckling leads to cracks and damages the structural performance of the battery case, of course, there is a possibility of water inflow into the corresponding part, and thus, the bracket like Comparative Illustration 1-1 may not be applied to the battery case. In order to maintain sealability, it is favorable to maintain the thickness reduction rate of -0.4 or more even in the curved portion.

Meanwhile, forming is allowed only when the sum of the forming part curve curvature radius (Rp) and the bending curvature radius (r) is 25 mm or more, and when primarily the bending curvature radius (r) was less than 3 mm, it was difficult to form a bracket which may be applied to the battery case even by the forming device and the forming method according to an example embodiment of the present disclosure, and even when the bending curvature radius (r) was 3 mm and the flange was able to be formed, in the case in which the forming part curve curvature radius (Rp) was less than 22 mm, the forming was not performed well in the curved portion flange. Meanwhile, when the bending curvature radius (r) and the forming part curve curvature radius (Rp) were increased, there was not difficulty in the forming itself, but the curvature radius in the battery case was increased to cause a dead space, which is impractical. Therefore, it is preferred that the bracket applied the battery case has the sum of the forming part curve curvature radius (Rp) and the bending curvature radius (r) of 30 mm or less.

In addition, an angle ($\theta$) at which the extended lines of the imaginary tangents intersect at both ends of the formed surface in the bracket A-20 may be 95 to 135°, and when the angle ($\theta$) was less than 95°, the forming was not performed well even when the conditions of the forming part curve curvature radius (Rp) and the bending curvature radius (r) were satisfied. When the angle ($\theta$) is more than 135°, the battery case should be composed of angles more than an octagon, and thus, a dead space which is not occupied by battery cells having a roughly rectangular shape occurs, which is impractical.

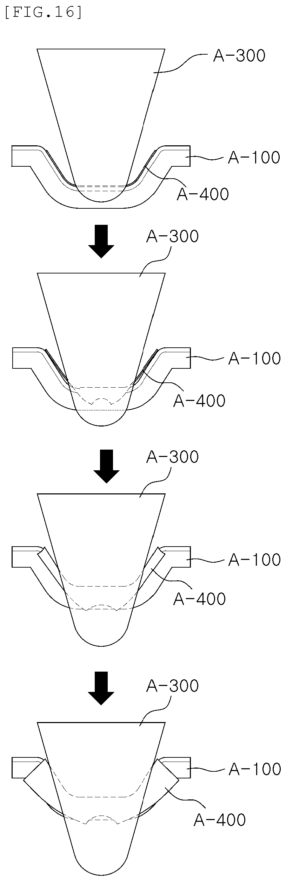

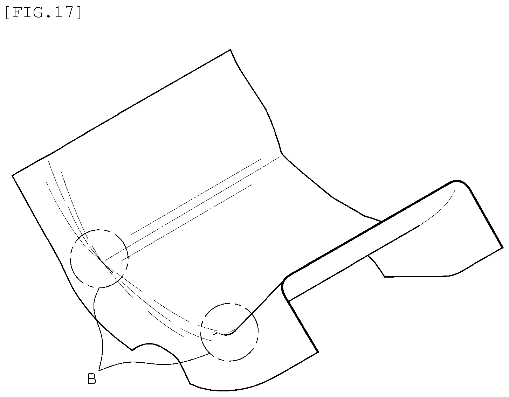

Meanwhile, FIG. 16 is a side view showing the forming method of Comparative Illustration 1-2, and FIG. 17 is a perspective view of the formed article manufactured by the forming method of Comparative Illustration 1-2.

Though the order of the forming method of FIG. 16 is identical to the order of the forming method of the present disclosure, the flange forming was not performed in the order of the edge, the center, and the curved portion in the second direction 3 in the second forming process (S130), but forming was performed with the die A-300 composed so that the forming was performed in the order of the center, the curved portion, and the edge. In Comparative Illustration 1-2, the die A-300 is composed so that the center has the lowest upper portion A-301a position, and sequential forming is performed toward the outside.

When the forming is performed as such, even in the case of identically applying a hot press forming process, as seen in FIG. 17, a folded area B occurs, thereby manufacturing a bracket which may not be used as a battery case.

Hereinabove, the example embodiments of the present disclosure were mainly described, but the present disclosure is not limited thereto, and may be variously modified and carried out, of course.

Hereinafter, the hot press-formed part according to the third aspect of the present disclosure will be described.

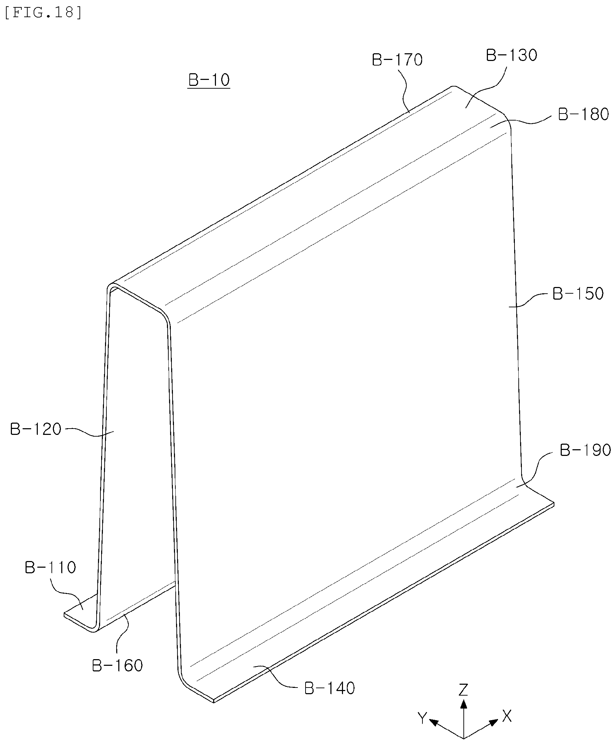

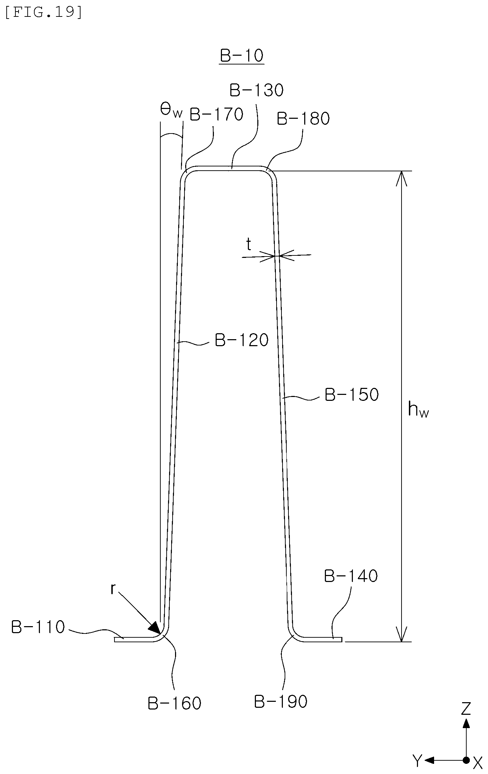

FIG. 18 is a perspective view of the formed part according to an example embodiment of the present disclosure, and FIG. 19 is a front view of the formed part according to an example embodiment of the present disclosure.

The hot press-formed part according to an example embodiment of the present disclosure includes: a first wall B-110 extended in a first direction (Y-direction), a second wall B-120 extended in a direction intersecting the first wall B-110, wherein a curvature portion B-160 is formed between the first wall B-110 and the second wall B-120, an angle between an arbitrary line perpendicular to the first direction (line parallel to the Z-direction) and the second wall B-120 is 0° or more and 5° or less, and the first wall B-110, the second wall B-120, and the curvature portion B-160 are integrally formed.

The hot press-formed part according to an example embodiment of the present disclosure includes the first wall

B-110, the second wall B-120, and the curvature portion B-160 disposed between the first wall B-110 and the second wall B-120. The forming is performed integrally in the order of the first wall B-110, the curvature portion B-160, and the second wall B-120.

The hot press-formed part is characterized by being integrally formed by including the first wall B-110 formed to be parallel in the first direction, the curvature portion B-160 curved from the first wall B-110, and the second wall B-120 connected to one end of the curvature portion B-160.

When an arbitrary line perpendicular to the first direction is assumed, the second wall B-120 may have an angle with the arbitrary line of 0° or more and 5° or less.

Many parts using a high-strength steel are being produced according to the demand for vehicle weight reduction and safety improvement, and it is difficult to use the high-strength steel in the production of parts having a small curvature radius due to poor bendability.

The hot press forming method is a working method of heating a blank, forming the heated blank into a desired shape through press forming, and cooling it with a mold closed to manufacture a high-strength formed part. In the hot press forming method as such, when the hot press forming method which is forming at a high temperature is used, even parts having a small curvature radius may be formed without cracks due to excellent characteristics of an elongation at a high temperature where forming is performed of 50% or more, and thus, the shape of formed parts which may not be secured with cold ultra-high strength may be secured.

An example embodiment of the present disclosure relates to a formed part B-10 which is integrally formed by including the first wall B-110, the curvature portion B-160, and the second wall B-120 through the hot press forming method, wherein the second wall B-120 has an angle with the arbitrary line of 0° or more and 5° or less, which is smaller than the conventional parts. Therefore, the first wall B-110 and the second wall B-120 have a shape close to a right angle and may have efficiency in use of the space surrounded by the first wall B-110 and the second wall B-120.

According to an example embodiment of the present disclosure, the first wall B-110, the second wall B-120, and the curvature portion B-160 may be integrally formed by working a sheet material.

The first wall B-110, the second wall B-120, and the curvature portion B-160 may be integrally formed according to the hot press forming method, using a single sheet material or a sheet material in which a plurality of sheet materials are combined in the thickness direction, as a blank. Since they are integrally formed by hot press, working is convenient, and the formed part B-10 having a relatively high tensile strength may be manufactured while problems in working in the joint portion such as a weld, damage due to stress concentration, or the like is prevented.

In an example embodiment of the present disclosure, the sheet material may be the plated steel sheet for hot press forming described above and may have the alloy composition described above.

According to an example embodiment of the present disclosure, the curvature radius (r) of the curvature portion B-160 may be 0.5 mm or more, and a limit bending (r/t) which is a ratio between the thickness (t) and the curvature radius (r) of the sheet material may be less than 2.5.

The ratio (r/t) between the thickness (t) and the curvature radius (r) of the sheet material before working generally depends on the limit bending value of a raw material. The limit bending may be a numerical value expressing a maximum curvature radius at which lak does not occur as compared to the material thickness. Since it is common that the thickness (t) of the sheet material is predetermined before working, when the curvature radius is decreased to be smaller than the ratio (r/t) which may be formed in the sheet material, cracks occur on the formed part B-10.

According to an example embodiment of the present disclosure, the ratio (r/t) between the thickness (t) and the curvature radius (r) of the sheet material may be less than 2.5. As compared to this, the limit bending of a conventional ultra-high strength material of a tensile strength of a 1500 MPa grade is known as 2.5 or more. For example, it means that the minimum curvature radius of the part which may be formed with an ultra-high strength of a 1500 MPa grade of a material having a thickness of 1.0 mm is 2.5 mm or more. However, according to the present disclosure, even when it is formed with ultra-high strength, it may have the ratio (r/t) value of less than 2.5, and thus, a product having the ratio (r/t) of less than 2.5 may be formed even with the ultra-high material of a tensile strength of a 1500 MPa grade. Therefore, the formed part according to an example embodiment of the present disclosure may be a part having excellent formability and a high space utilization. According to an example embodiment of the present disclosure, a third wall B-130 and a fourth wall B-140 parallel to the first direction and a fifth wall B-150 connected to the third wall B-130 and the fourth wall B-140 are included, the third wall B-130 is extended from the second wall B-120, and the first wall B-110 to the fifth wall B-150 may be integrally formed.

According to the hot press forming process, hat shapes having a plurality of wall surfaces may be formed at once, and thus, formability is excellent.

As an example, the third wall B-130 and the fourth wall B-140 parallel to the first direction may be formed, and the first wall B-110 and the fourth wall B-140 may have the same height in the direction perpendicular to the first direction, but the present disclosure is not limited thereto. Further, the third wall B-130 may have different heights. The fifth wall may be disposed between the third wall B-130 and the fourth wall B-140, the second wall B-120 and the third wall B-130 may be connected to the first connection part B-170, the third wall B-130 and the fifth wall B-150 may be connected to the second

connection part B-180, and the fifth wall B-150 and the fourth wall B-140 may be connected to the third connection part B-190. Therefore, the first wall to the fifth wall B-150, the curvature portion B-160, and the first connection part B-170 to the third connection part B-190 may be integrally formed by working a sheet material.

Herein, the first connection part B-170 to the third connection part B-190 may be formed into a shape having a curvature radius as in the curvature portion B-160, in which the curvature radius may have all of the characteristics of the curvature portion B-160 of the first wall B-110 and the second wall B-120. However, the present disclosure is not limited to the shape.

According to an example embodiment of the present disclosure, the formed part may have the tensile strength of 1300 to 2100 MPa.

The tensile strength referred to as ultra-high strength may be generally about 1500 MPa. According to the present disclosure, a formed part having a tensile strength which may be considered as high strength or ultra-high strength of about 1300 to 2100 MPa may be manufactured. Since the formability becomes better due to the hot press forming, the formed part according to an example embodiment of the present disclosure is integrally manufactured and may be manufactured to have a tensile strength of ultra-high strength while forming parts having a relatively small curvature radius.

In addition, the parts having the aforementioned small curvature radius may be formed even with a steel for hot press forming of a 1800 MPa and 2000 MPa grade, when excellent formability at a high temperature is utilized. Therefore, according to the present disclosure, even formed parts having a small curvature radius having a tensile strength of 1700 MPa to 1900 MPa, furthermore, 1900 MPa to 2100 MPa may be manufactured.

In addition, the microstructure of the formed part B-10 may have martensite at an area fraction of 98% or more. Since most of the area fraction of the formed part B-10 according to the present disclosure is occupied by martensite which is a hard phase having high strength, it may form a tensile strength of an ultra-high strength grade as described above.

As an example, the formed part may be formed by martensite at an area fraction of 98% or more and include a small amount of other phases such as ferrite or bainite.

According to an example embodiment of the present disclosure, a third wall B-130 which is parallel to the first direction and is connected to the second wall B-120 may be further included, and when a length from the first wall B-110 to the third wall B-130, which is perpendicular to the first direction is defined as a wall part height (hw), and an angle between an arbitrary line perpendicular to the first direction and the second wall B-120 is defined as a wall part angle (θw), the following Relation 3 may be satisfied:

[Relation 3]

$$hw \leq 13.4 * \theta w + 182.4$$

wherein the unit of hw is mm, the unit of θw is degrees, and calculation is performed by making the left and right sides dimensionless.

The formed part which satisfies Relation 3 and worked by hot press forming may be manufactured with excellent quality without defects such as cracks.

Referring to the following Table 1, it was found that when the Relation is satisfied, formability is excellent.

[Table 1]

| | θw(°) | hw(mm) | Calculated value of right side | Whether Relation 3 was satisfied | Formability |
|---|---|---|---|---|---|
| Inventive Illustration 2-1 | 0 | 180 | 182.4 | Satisfied | Good |
| Inventive Illustration 2-2 | 1 | 190 | 195.8 | Satisfied | Good |
| Inventive Illustration 2-3 | 3 | 220 | 222.6 | Satisfied | Good |
| Inventive Illustration 2-4 | 5 | 240 | 249.4 | Satisfied | Good |
| Comparative illustration 2-1 | 0 | 190 | 182.4 | Unsatisfied | Poor |
| Comparative illustration 2-2 | 1 | 200 | 195.8 | Unsatisfied | Poor |
| Comparative illustration 2-3 | 3 | 230 | 222.6 | Unsatisfied | Poor |
| Comparative illustration 2-4 | 5 | 260 | 249.4 | Unsatisfied | Poor |

Comparative Illustrations 2-1 to 2-4 were all formed identically to Inventive Illustrations 2-1 to 2-4, respectively, except the wall part height indicated above. However, as a result of forming the comparative examples had problems such as poor formability such as cracks.

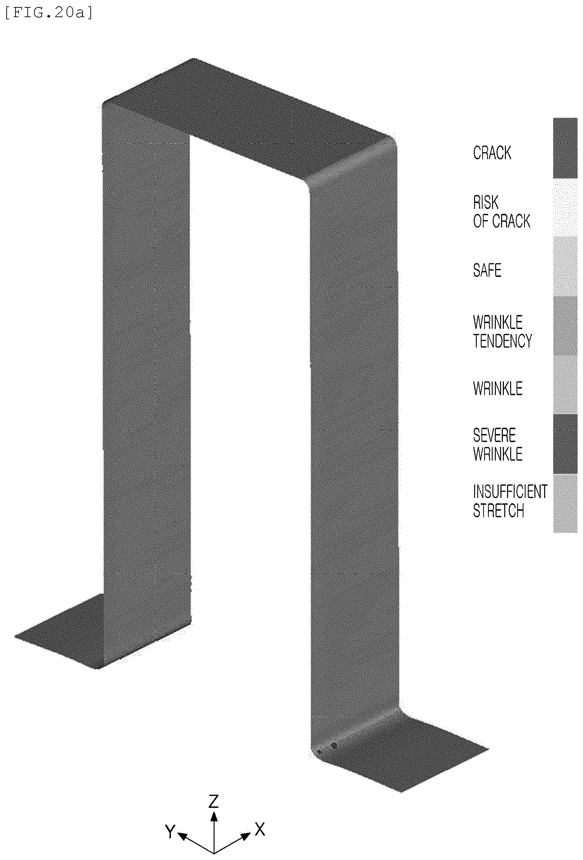

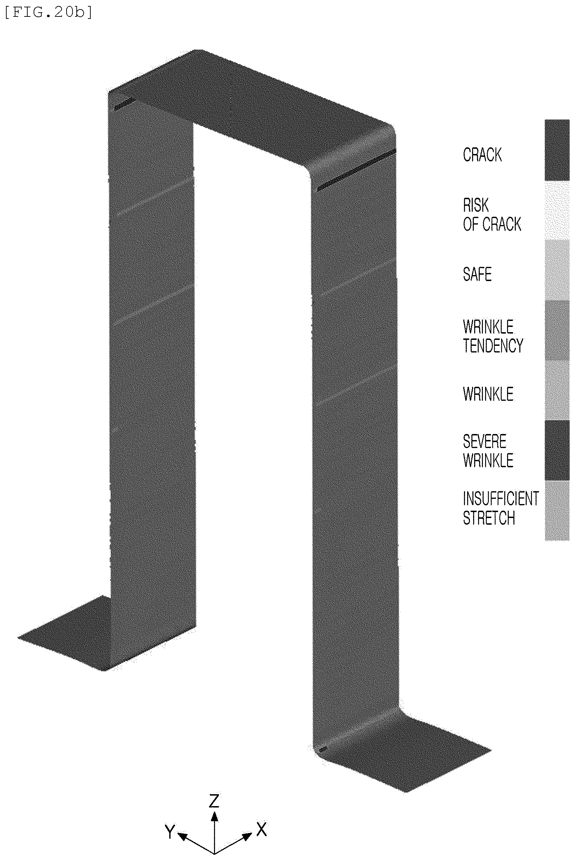

FIG. 20a is a drawing which was interpreted identically to the conditions of Inventive Illustration 2-1, and FIG. 20b is a drawing which was interpreted as the conditions of Comparative Illustration 2-1. When FIG 20a and FIG. 20b were compared, it was found that in Comparative Illustration 2-1, cracks marked in red occurred in the upper portion of the second wall B-120 or the fifth wall B-150, and some parts in yellow were interpreted as parts at risk of crack occurrence.

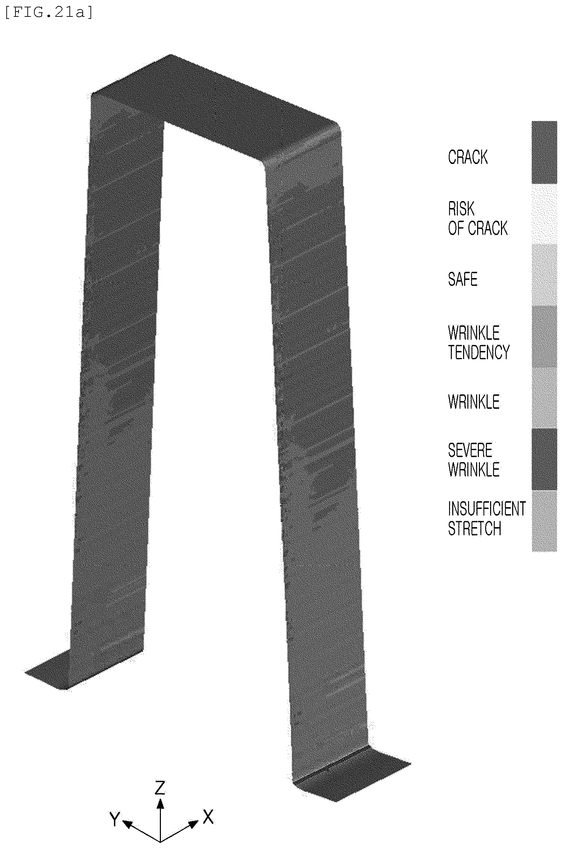

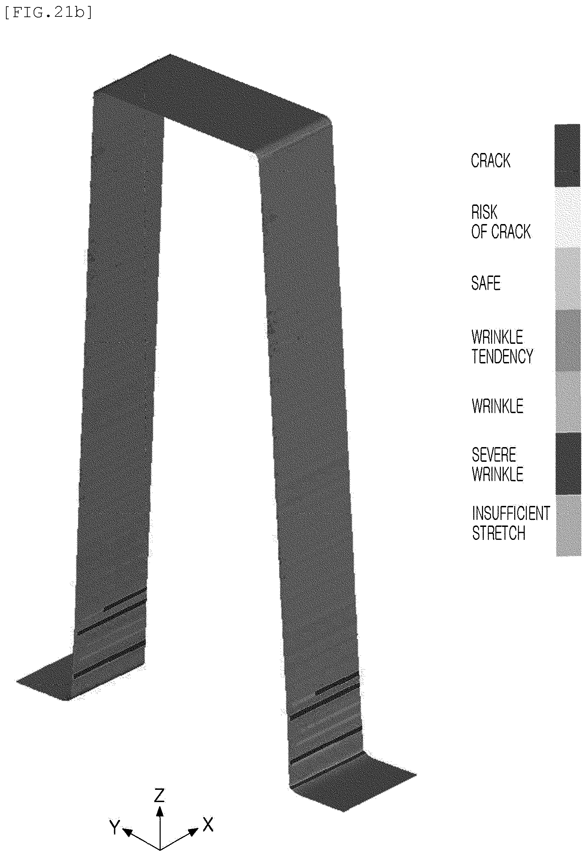

FIG. 21a is a drawing which was interpreted identically to the conditions of Inventive Illustration 2-3, and FIG. 21b is a drawing which was interpreted as the conditions of Comparative Illustration 2-3. When FIG 21a and FIG. 21b were compared, it was found that in Comparative Illustration 2-3, cracks marked in red occurred in the lower portion of the second wall B-120 or the fifth wall B-150, and some parts in yellow were interpreted as parts at risk of crack occurrence. In comparison, Inventive Illustration 2-3 had some parts at risk of crack occurrence marked in yellow, but no crack occurrence.

Hereinafter, the battery pack module which is another aspect of the present disclosure will be described.

The following battery pack module includes the formed parts described above, and the description of the formed parts cites the above.

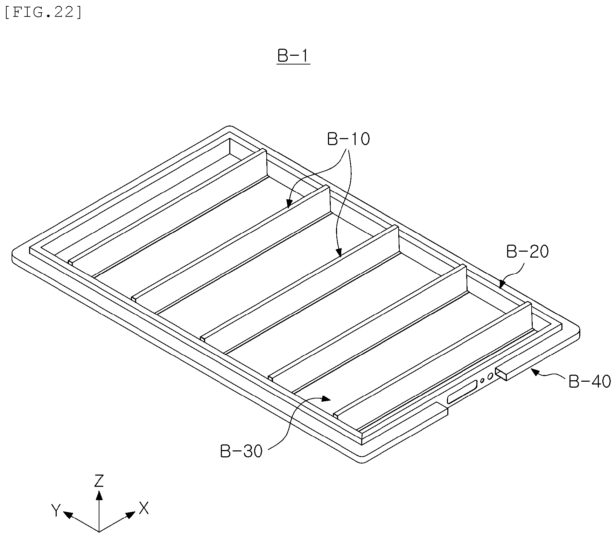

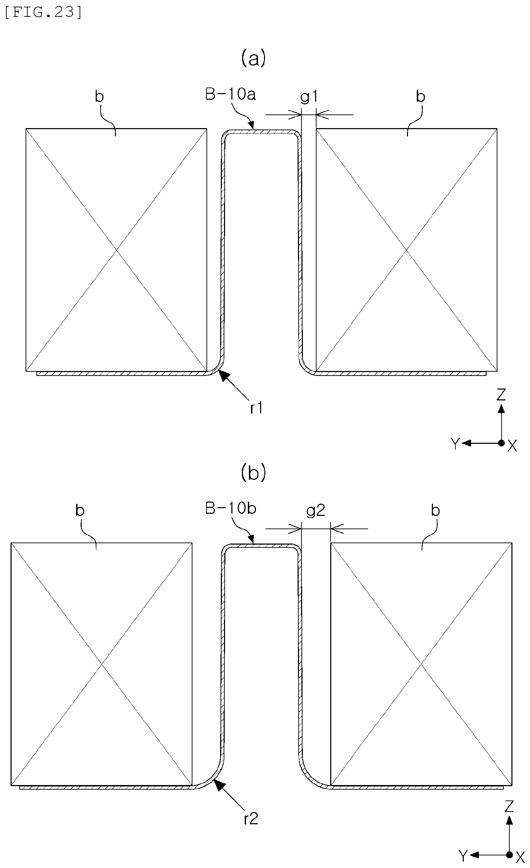

FIG. 22 is a drawing illustrating the battery pack module according to an example embodiment of the present disclosure, FIG. 23 is a drawing for showing a space utilization when the battery pack module is disposed, by expressing the cross section of a part of the battery pack module, in which (a) shows the case in which the curvature radius of the hot press-formed part is small, and (b) shows the case in which the curvature radius is larger than the case (a).

The battery pack module B-11 according to an example embodiment of the present disclosure includes: a battery case B-20 formed around a battery pack, a base B-30 which is disposed in a lower portion of the battery case B-20 and is connected to the battery case B-20 to form a space where the battery pack is disposed, and a hot press-formed part B-10 which is disposed across an inside of the battery case B-20 and is connected to the battery case B-20 and the base B-30.

The battery case B-20 has a configuration formed around the side surfaces of the battery pack, and the base B-30 has a common sheet material or, if necessary, bends or grooves and has a configuration in which the battery pack is settled.

As an example, in order to prevent collision, a reinforcing member B-40 attached to the outer surface of the battery case B-20 may be further included.

As an example, the hot press-formed part B-10 reinforces rigidity for preparing for impact from collision of a battery frame as a cross member and may be disposed inside the battery case B-20.

As an example, the hot press-formed part B-10 may be disposed in multiples at regular intervals in the battery case B-20.

The battery pack is disposed in a space formed between the base B-30, the battery case B-20, and the cross member, and the battery pack module B-1 is for stably placing the battery in a vehicle body by including the battery pack.

The formed part having a curvature radius smaller than that of the conventional parts and high tensile strength is disposed in the battery pack to increase the rigidity of the battery pack module B-1 itself, thereby preventing fire and the like due to battery damage by impact.

In addition, since generally the cross member is provided in multiples in the battery case B-20, the size of the battery pack may be increased according to the benefits of an increased space utilization, and thus, when the battery pack module B-1 has the same volume, an effect of increasing a battery capacity is provided.

As an example of being used as the cross member, when the curvature radius (r2) in a lower end portion of the hot press-formed part B-10b of Embodiment 2-2 in FIG. 23B is larger than the curvature radius r1 in the lower end portion of the hot press-formed part B-10a of Embodiment 2-1 in FIG. 23A, it may be recognized by comparing gaps which are remaining spaces after placing the battery pack b. Since the gap g2 of FIG. 23B is larger than the gap g1 of FIG. 23A to increase the curvature radius (r), the space which is not available for loading of the battery pack b is formed to be larger.

Further, it is recognized that the fact that space utilization is increased with the decreasing curvature radius (r) has greater utility when a plurality of cross members are mounted in the same battery pack module B-1.

Hereinafter, the hot press-formed part according to the fourth aspect of the present disclosure will be described.

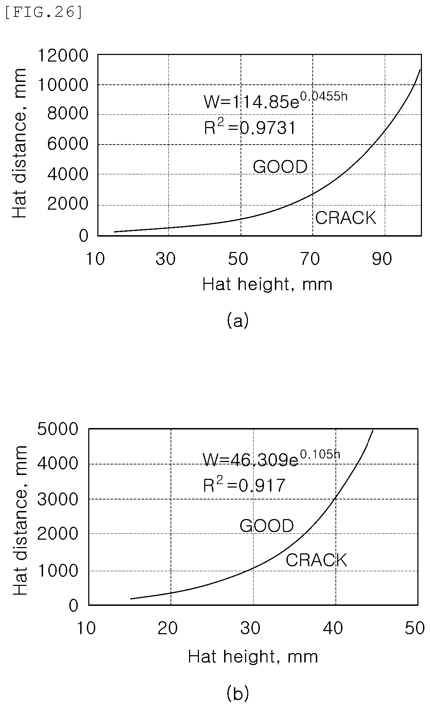

FIG. 24 is a perspective view illustrating a press formed part according to an example embodiment of the present disclosure. FIG. 25 is a perspective view illustrating a press formed part according to another example embodiment of the present disclosure. In FIG. 26, (a) is a graph showing a relationship between a predetermined length and a predetermined height of the press formed part according to an example embodiment of the present disclosure, and (b) is a graph showing a relationship between a predetermined length and a predetermined height of the press formed part according to another example embodiment of the present disclosure. Further, in FIG, 27, (a) shows an example showing a strain applied to the press formed part manufactured using a conventional manufacturing method, and (b) shows an example showing a strain applied to the press formed part manufactured using the manufacturing method according to the example embodiments of the present disclosure.

Referring to FIGS. 24 and 25, the press formed parts C-10 and C-10' according to example embodiments of the

present disclosure may be manufactured by performing press forming working on a metal sheet. Herein, the hot press forming method may be used in the manufacture of press formed parts C-10 and C-10'.

The press formed parts C-10 and C-10' may include a flat plate part C-110 which is not press formed to have a flat shape and a deformation portion C-120 having a convex shape toward one direction by press forming. Herein, the deformation portion C-120 may be formed in multiples. In this case, the flat plate part C-110 may be disposed between a plurality of deformation portions C-120.

The deformation portion C-120 may have a convex shape protruding upward (+Z), based on the drawing. Herein, the deformation portion C-120 may include a top plate part C-121, a vertical wall part C-122, and a boundary part C-123.

The top plate part C-121 may be an upper end portion of the deformation portion C-120 extending in the first direction. Herein, the first direction may be, for example, a direction parallel to a longitudinal direction Y of the press formed parts C-10 and C-10'.

The vertical wall part C-122 may be a side wall part of the deformation portion C-120 extending in the second direction. Herein, the second direction may be a direction different from the first direction described above. As an example, the second direction may be a direction inclined toward the first direction at a certain angle. As another example, the second direction is a direction perpendicular to the first direction and may be parallel to the up and down direction Z in the drawing. Meanwhile, the up and down direction Z may be parallel to the height direction of the deformation portion C-120.

The vertical wall part C-122 may be continuous with the top plate part C-121. More specifically, the vertical wall part C-122 may be disposed so that the upper end is continuous with one side end of the top plate part C-121. The vertical wall part C-122 may be provided in a pair. A pair of vertical wall parts C-122 are disposed to be continuous with both side ends of the top plate part C-121, respectively to form both side wall parts of the deformation portion C-120.

The part C-121a (hereinafter, referred to as a shoulder part) where the side end of the top plate part C-121 and the upper end of the vertical wall part C-122 are connected may have a round shape having a first curvature radius. Herein, the shoulder part C-121a may be convexly curved outward from the deformation portion C-120.

The boundary part C-123 may be a boundary between the deformation portion C-120 and the flat plate part C-110 which are continuous along the longitudinal direction Y of the press formed parts C-10 and C-10'. One end of the boundary part C-123 may be continuous with the lower end of the vertical wall part C-122, and the other end of the boundary part C-123 may be continuous with one end of the flat plate part C-110. Herein, the other end of the flat plate part C-110 may be continuous with the boundary part C-123 provided in another deformation portion C-120. The boundary part C-123 is provided in a pair and may be disposed so that it is continuous with each of the lower ends of a pair of vertical wall parts C-122.

The boundary part C-123 may have a round shape with a second curvature radius. The boundary part C-123 may be concavely curved inward from the deformation portion C-120. Herein, the second curvature radius may be identical or similar to the first curvature radius.

As described above, the deformation portion C-120 may have a form in which the boundary part C-123, the vertical wall part C-122, the top plate part C-121, the vertical wall part C-122, and the boundary part C-123 are sequentially continuous along the longitudinal direction Y. Accordingly, the deformation portion C-120 may have a hat shape or a shape similar thereto.

The deformation portion C-120 as described above may be provided in multiples. More specifically, at least three deformation portions C-120 may be provided. In this case, the flat plate part C-110 may be disposed between adjacent two deformation portions C-120 among a plurality of deformation portions C-120. Herein, the adjacent two deformation portions C-120 may be continuous by the flat plate part C-110 disposed in the center.

Accordingly, the press formed parts C-10 and C-10' may have a form in which 3 or more deformation portions C-120 and a plurality of flat plate parts C-110 may be disposed alternately in a row along the longitudinal direction Y. Herein, the flat plate part C-110 may be disposed in both outer sides of the press formed parts C-10 and C-10' based on the longitudinal direction Y, but is not limited thereto.

The deformation portion C-120 may be formed at a predetermined height (h). Herein, the predetermined height (h) is a height of the deformation portion C-120, and means a length from the lower surface of the flat plate part C-110 to the upper surface of the top plate part C-121.

The adjacent two deformation portion C-120 may be spaced apart by a predetermined length (w) along the longitudinal direction Y. Herein, the predetermined length (w) may refer to a length of the flat plate part C-110 measured based on the longitudinal direction Y. Herein, the predetermined length (w) may be measured based on the flat plate part C-110 disposed between the adjacent two deformation portions C-120.

As shown in FIG. 24, the press formed part C-10 according to an example embodiment of the present disclosure (hereinafter, referred to as Embodiment 3-1) may include three deformation portions C-120. Accordingly, the press formed part C-10 of Embodiment 3-1 may include at least two flat plate parts C-110, so that the press formed part is disposed between the three deformation portions C-120.

As shown in FIG. 25, the press formed part C-10 according to another example embodiment of the present disclosure (hereinafter, referred to as Embodiment 3-2') may include four or more deformation portions C-120. Accord-

ingly, the press formed part C-10 of Embodiment 3-1 may include at least three flat plate parts C-110, so that the press formed part is disposed between the four deformation portions C-120.

Meanwhile, only the case in which the press formed part C-10' is provided with four deformation portion C-120 is illustrated in the drawing, but the present disclosure is not limited thereto. Though not illustrated in the drawing, as another example, 5 or more deformation portions C-120 may be formed in the press formed part C-10', in which the upper limit of the number of the deformation portions C-120 is not limited.

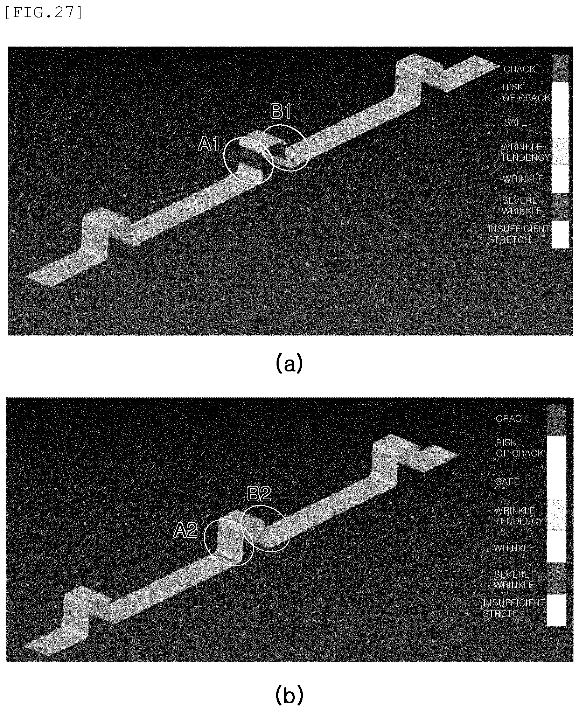

Referring to FIGS. 26 and 27, in the conventional hot press forming method, the deformation portion C-120 is first formed, and then a separate flat plate type metal sheet is attached to the lower end of the deformation portion C-120 after forming. In this case, as the number of the deformation portions C-120 to be formed is increased, a force (deformation force, stress) is concentrated on the vertical wall part C-122 connected to the flat plate type metal sheet and a periphery thereof (A1 and B1 of FIG. 27A) in the manufacturing process, as illustratively shown in (a) of FIG. 27. Thus, cracks and the like occur in the deformation portion C-120 of the press formed part to cause damage. In order to prevent this, a distance between the connected deformation portions C-120 should be increased, and since the size of the manufactured press formed parts C-10 and C-10' has to be limited, the number of deformation portions C-120 which may be included therein is also limited.

Thus, in an example embodiment of the present disclosure, press formed parts C-10 and C-10' which may prevent damage in the deformation portion C-120 due to the hot press forming are intended to be provided, using a relationship between the height (predetermined height, h) of the deformation portion C-120 and a separation distance (predetermined length, w) between adjacent two deformation portions C-120. Herein, "the relationship between the predetermined height (h) and the predetermined length (w)" may be determined based on the number of the deformation portions C-120 formed in the press formed parts C-10 and C-10'.

In the press formed parts C-10 according to Embodiment 3-1 of the present disclosure, three deformation portion C-120 is formed, and thus, the relationship between "the predetermined height (h)" of the deformation portion C-120 and "the predetermined length (w)" where the adjacent two deformation portions C-120 are separated may be defined by the following Equation (1):

$$w_{min} \leq w \leq 114.85e^{0.0455h} \ldots \text{Equation (1)}$$

wherein w is a predetermined length of Embodiment 3-1, and h is a predetermined height of Embodiment 3-1. Further, $w_{min}$ may refer to a minimum value (that is, a minimum spacing) of the predetermined length (w) of Embodiment 3-1.

As illustrated in the graph of (a) of FIG. 26 and (b) of FIG. 27, when it is designed that the distance (predetermined length, w) between three deformation portions C-120 included in the press formed parts C-10 separated from each other satisfies Equation (1), occurrence of damage such as cracks in the deformation portion C-120 and the surrounding part (A2 and B2 in (b) of FIG. 27) in the hot press forming process may be significantly decreased. Herein, the method for manufacturing a press formed part C-10 according to Embodiment 3-1 will be described in detail in the following.

In addition, in the press formed parts C-10 according to Embodiment 3-2 of the present disclosure, 4 or more deformation portion C-120 is formed, and thus, the relationship between "the predetermined height (h)" of the deformation portion C-120 and "the predetermined length (w)" where the adjacent two deformation portions C-120 are separated may be defined by the following Equation (2):

$$w_{min} \leq w \leq 46.309e^{0.105h} \ldots \text{Equation (2)}$$

wherein w is a predetermined length of Embodiment 3-2, and h is a predetermined height of Embodiment 3-2. Further, $w_{min}$ may refer to a minimum value of the predetermined length of Embodiment 3-2.

As illustrated in the graph of (b) of FIG. 26 and (b) of FIG. 27, when it is designed that the distance (predetermined length, w) between three deformation portions C-120 included in the press formed parts C-10 separated from each other satisfies Equation (1), occurrence of damage such as cracks in the deformation portion C-120 and the surrounding part (A2 and B2 in (b) of FIG. 27) in the hot press forming process may be significantly decreased. Herein, the method for manufacturing a press formed part C-10 according to Embodiment 3-1 will be described in detail in the following.

Meanwhile, in Embodiments 3-1 and 3-2 described above, the predetermined length (w) may be 20 mm or more. That is, a minimum spacing ($w_{min}$) of the two deformation portions C-120 adjacent to each other may be 20 mm. This may be a minimum spacing required for securing a space for disposing a cooling hole (not shown) between first pressurizing parts C-210 provided in the molds C-200 and C-400, and/or between the second pressurizing part C-410 and the intermediate pressurizing part C-300, in the manufacturing devices C-20 and C-20' of the press formed parts C-10 and C-10' described later.

FIG. 28 is a flow chart showing the method for manufacturing a press formed part according to an example embodiment of the present disclosure. FIG. 29 schematically illustrates a first process of manufacturing the press formed part of FIG. 24. FIG. 30 schematically illustrates a second process of manufacturing the press formed part of FIG. 24. FIG. 31 schematically illustrates a third process of manufacturing the press formed part of FIG. 24. Further, FIG. 32 schematically illustrates a fourth process of manufacturing the press formed part of FIG. 24.

Referring to FIGS. 28 to 32, the manufacturing device C-20 for manufacturing the press formed part C-10 according to Embodiment 3-1 may include a first mold C-200, an intermediate pressurizing part C-300, and a second mold C-400. In this case, one intermediate pressurizing part C-300 may be provided. Herein, the first mold C-200 may be an upper mold, and the second mold C-400 may be a lower mold, based on the up and down direction Z.

The first mold C-200 and the second mold C-400 may be disposed to face each other along the pressurizing direction -Z. The first mold C-200 may be disposed on the upper side of the second mold C-400. Herein, the first mold C-200 may be installed in an elevatable and drivable upper support (not shown). Thus, the first mold C-200 may descend toward the second mold C-400 or rise away from the second mold C-400. Further, the second mold C-400 may be disposed, for example, on a lower support (not shown) which is fixedly installed on the floor surface of a building in which the manufacturing device C-20 is installed.

The first mold C-200 may be provided with the first pressurizing part C-210. The first pressurizing part C-210 may pressurize the upper surface of a metal sheet during press forming. Herein, the metal sheet may be a material used for manufacturing the press formed part C-10. The metal sheet before press forming may have, for example, an upper surface and a lower surface having a flat shape. Herein, the first pressurizing part C-210 may be configured to have the shape and size corresponding to the "upper surface of the deformation portion C-120 of the press formed part C-10" described above.

The manufacturing device C-20 is for manufacturing a press formed part C-10 of Embodiment 3-1, and three first pressurizing parts C-210 may be provided. Herein, the three first pressurizing part C-210 may be separated from each other by a first distance. The first distance may be the same as the predetermined length (w) described above. In addition, the first mold C-200 may be provided with the first plane part C-220. The first plane part C-220 may be disposed between the adjacent two first pressurizing parts C-210. The first plane part C-220 may be extended parallel to the longitudinal direction Y between two first pressurizing parts C-210 and connect the first pressurizing parts C-210. As described above, since three first pressurizing parts C-210 are provided, at least two first plane parts C-220 may be provided.

Accordingly, the first mold C-200 may have a form in which three first pressurizing parts C-210 are separated by the first distance (that is, the predetermined length, W) along the longitudinal direction Y, the first plane parts C-220 are disposed between them to connect the first pressurizing parts C-210.

The second mold C-400 may be provided with the second pressurizing part C-410 and the second plane part C-420a. Herein, the second pressurizing part C-410 may be formed into a shape and a size corresponding to the lower surface of the press formed part C-10.

Unlike the first mold C-200, the second mold C-400 may be provided with only two second pressurizing parts C-410. In this case, the two second pressurizing parts C-410 may be disposed to be symmetrical to the two first pressurizing parts C-210 disposed on both sides among the three first pressurizing parts C-210, along the longitudinal direction Y. Accordingly, in the second mold C-400, there is no second pressurizing part C-410 in an area (hereinafter, center area) facing the first pressurizing part C-210 in the center among the three first pressurizing parts C-210.

Accordingly, the second mold C-400 may be a single structure having a shape connected by the two second pressurizing parts C-410 and the second plane part C-420a disposed therebetween. Herein, the plane part C-420a may be provided with a penetration part C-420aa. An intermediate pressurizing part C-300 may be inserted into the penetration part C-420aa, during press forming on an outer area of the metal sheet C-10A. The penetration part C-420aa may be formed by penetrating one portion of the plane part C-420a along the up and down direction Z. The penetration part C-420aa may have a form having the cross-sectional shape and area corresponding to the shape and size of the intermediate pressurizing part C-300. In addition, a plane part 2-2 C-420b may be further provided, respectively, on both sides of the first pressurizing parts C-210.

The intermediate pressurizing part C-300 may be disposed between the first mold C-200 and the second mold C-400. As shown in FIG. 38, the metal sheet C-10A which is the subject to be press mold may be disposed in the lower side of the first mold C-200. In this case, the intermediate pressurizing part C-300 is disposed between the metal sheet C-10A and the second mold C-400, and when the first mold C-200 descends, a part of the lower surface of the metal sheet C-10A may be pressurized. The intermediate pressurizing part C-300 may be a pad for bend working by pressurizing the lower surface of the metal sheet C-10A.

The intermediate pressurizing part C-300 may be disposed directly on the center area described above of the second mold C-400. Herein, the intermediate pressurizing part C-300 may have the same shape as the second pressurizing part C-410. That is, the intermediate pressurizing part C-300 may have the shape and size corresponding to the lower surface of the press formed part C-10. The intermediate pressurizing part C-300 pressurizes the metal sheet C-10A up and down, together with the first pressurizing part C-210 in the center among the three first pressurizing parts C-210, during press forming, thereby forming the deformation portion C-120 disposed in the center.

The intermediate pressurizing part C-300 may be configured to be elevatable. Thus, the intermediate pressurizing part C-300 may descend along the pressurizing direction -Z, during press forming. In addition, the intermediate pressurizing part C-300 may rise in the opposite direction Z to the pressurizing direction, after completing press forming. The rise of the intermediate pressurizing part C-300 as such may be implemented by an elastic member (not shown) installed in the intermediate pressurizing part C-300.

The "method for manufacturing a press formed part C-10 according to Embodiment 3-1" using the manufacturing device C-20 may be as follows.

First, a metal sheet C-10A may be supplied to the manufacturing device C-20 (S100). Before starting the press forming, the metal sheet C-10A may be disposed at a position between the first mold C-200 and the intermediate pressurizing part C-300 (hereinafter, referred to as a working position), as shown in FIG. 29. Meanwhile, the metal sheet C-10A may be supplied to the manufacturing device C-20, in a state of being heated by a separate heating device (not shown).

As an example, the metal sheet C-10A is in the working position, the upper surface of the metal sheet C-10A may be in a state of being disposed so that it is in contact with the lower surface of the first mold C-200 or only a minor gap exists. Herein, the second mold C-400 may be in a state of being disposed to be symmetrical to the first mold C-200, with the metal sheet C-10A and the intermediate pressurizing part C-300 interposed therebetween.

In addition, when the metal sheet C-10A is in a state of being disposed in the working position (that is, before starting press forming), the intermediate pressurizing part C-300 may be disposed in the upper side of the second mold C-400. Accordingly, there may be a height difference (hi) between the intermediate pressurizing part C-300 and the second pressurizing part C-410. Herein, the height difference (hi) described above may refer to a distance from the upper surface of the second pressurizing part C-410 to the upper surface of the intermediate pressurizing part C-300. In this case, the height difference (hi) between the intermediate pressurizing part C-300 and the second pressurizing part C-410 may be smaller than the "predetermined height (h)" which is the height of the press formed part C-10. Herein, the height difference (hi) may be 65% or more of the predetermined height (h). When the manufacturing device C-20 is configured to have the height difference (hi) as such, occurrence of damage such as cracks in the deformation portion C-120 formed by press forming may be significantly decreased.

Next, first press forming of the metal sheet C-10A may be performed by the first mold C-200 and the intermediate pressurizing part C-300 (S200). As shown in FIG. 30, the first mold C-200 may descend along the pressurizing direction -Z and pressurize the upper surface of the metal sheet C-10A. In this case, the first mold C-200 may descend to the position where the lower surface of the metal sheet C-10A is not in contact with the second mold C-400. Herein, since the intermediate pressurizing part C-300 is disposed to be higher than the second pressurizing part C-410 by the height difference (hi) described above, only the intermediate pressurizing part C-300 may be introduced into the first pressurizing part C-210 and pressurize the center area of the metal sheet C-10A. Accordingly, only the center area of the metal sheet C-10A may be pressed in the up and down direction by the first pressurizing part C-210 among the three first pressurizing parts C-210 and the intermediate pressurizing part C-300. Thus, only the center area of the metal sheet C-10A is bend-worked, thereby forming one deformation portion C-120.

Next, second press forming of the metal sheet C-10A may be performed by the first mold C-200 and the second mold C-400 (S300). After performing the first press forming in S200, the first mold C-200 may further descend along the pressurizing direction -Z, as shown in FIG. 31. In this process, the intermediate pressurizing part C-300 may descend together with the first mold C-200, in a state of being introduced into the first pressurizing part C-210 in the center together with the center area of the metal sheet C-10A. Accordingly, the outer area of the metal sheet C-10A may be in contact with the upper surface of the two second pressurizing parts C-410.

Thereafter, as the first mold C-200 continues to descend, the second pressurizing part C-410 is introduced to the first pressurizing part C-210, and may pressurize the both outer areas of the metal sheet C-10A. In this process, the intermediate pressurizing part C-300 may be housed in the penetration part C-420aa of the second mold C-400. The both outer areas of the metal sheet C-10A may be pressed in the up and down direction simultaneously by the two outer first pressurizing parts C-210 and the two outer second pressurizing parts C-410. Thus, the both outer areas of the metal sheet C-10A is bend-worked, thereby further forming two deformation portions C-120.

Next, the first mold C-200 and the intermediate pressurizing part C-300 may return to its original position (S400). After the "stepwise press forming" in S200 and S300 as described above, the first mold C-200 may rise in the opposite direction +Z to the pressurizing direction -Z, as shown in FIG. 32. In this process, the deformation portions C-120 may be separated from the first pressurizing parts C-210. In addition, the intermediate pressurizing part C-300 may be separated from the deformation portion C-120 in the center and return to its original position. Thus, the manufacture of the press formed part C-10 in the form in which the three deformation portions C-120 having a predetermined height (h) are separated from each other by the predetermined length (w) may be completed.

Next, the press formed part C-10 after manufacture may be discharged (S500). The press formed part C-10 may be transported for the next working or manufacturing process, after being discharged from the manufacturing device C-20. Thereafter, the manufacturing method described above may be repeatedly performed, by supplying the next metal sheet

C-10A.

FIG. 33 schematically illustrates a first process of manufacturing the press formed part of FIG. 25. FIG. 34 schematically illustrates a second process of manufacturing the press formed part of FIG. 25. FIG. 35 schematically illustrates a third process of manufacturing the press formed part of FIG. 25. Further, FIG. 36 schematically illustrates a fourth process of manufacturing the press formed part of FIG. 25.

Referring to FIGS. 28 and 33 to 36, the press formed part C-10 according to Embodiment 3-2 may be manufactured by the manufacturing method as described below. The manufacturing device C-20' for a press formed part may include a first mold C-200, an intermediate pressurizing part C-300, and a second mold C-400. Herein, at least two intermediate pressurizing parts C-300 may be provided. In this case, since most of the characteristics of the first mold C-200, the intermediate pressurizing part C-300, and the second mold C-400 are identical or similar to the case of Embodiment 3-1 described above, duplicate description will be omitted.

Since the press formed part C-10' according to Embodiment 3-2 is provided with 4 or more deformation portions C-120, the first mold C-200 may be provided with 4 or more first pressurizing parts C-210. Hereinafter, for convenience of description, description will focus on the case in which four first pressurizing parts C-210 are provided and separated from each other by the predetermined length (w). In this case, two one pressurizing parts C-210 are disposed in the center area of the first mold C-200, and the first pressurizing parts C-210 may be disposed one by one on both sides around them.

Two second pressurizing parts C-410 may be provided in the second mold C-400. Herein, the two second pressurizing parts C-410 may be disposed to face the two first pressurizing parts C-210 which are disposed, respectively on both sides of the first mold C-200.

When four first pressurizing parts C-210 are provided, two intermediate pressurizing parts C-300 may be provided. In this case, the two intermediate pressurizing parts C-300 may be disposed to face the two first pressurizing parts C-210 disposed in the center area of the first mold C-200. It is as described above that the intermediate pressurizing parts C-300 are disposed between the first mold C-200 and the second mold C-400.

In addition, in the case of Embodiment 3-2, two penetration parts C-420aa may be provided on the second plane part C-420a of the second mold C-400. Accordingly, when the outer area of the metal sheet C-10A is press formed by the first mold C-200 and the second mold C-400, the two intermediate pressurizing parts C-300 may be housed in the penetration parts C-420aa, respectively.

In the "method for manufacturing a press formed part C-10' according to Embodiment 3-2" using the manufacturing device C-20' as described above, S100, S200, S300, and S400 may be sequentially performed, like the method for manufacturing a press formed part C-10 of Embodiment 3-1. Herein, since the specific manufacturing method performed in each process is identical or similar to the case of Embodiment 3-1, description will focus on the difference.

First, in S100, a metal sheet C-10' may be supplied to the working position described above, as shown in FIG. 33. In this case, the metal sheet C-10A may be supplied to the manufacturing device C-20', in a state of being heated by a separate heating device (not shown). When supplied to the working position, two intermediate pressurizing part C-300 may be disposed under the center area of the metal sheet C-10'. Herein, the two intermediate pressurizing part C-300 may be disposed at the same height. In this case, a height difference (hi) between the intermediate pressurizing parts C-300 and the second pressurizing part C-410 may be the same as the case of Embodiment 3-1.

Next, in S200, as the first mold C-200 descends, the intermediate pressurizing parts C-300 are introduced into the two first pressurizing parts C-210 disposed in the center area of the first mold C-200, respectively, and may pressurize the center area of the metal sheet C-10', as shown in FIG. 34. Two deformation portions C-120 may be formed in the center area of the metal sheet C-10A, by the first press forming process.

Next, in S300, the first mold C-200 further descends, so that the two pressurizing parts C-410 may be introduced into the two first pressurizing parts C-210 disposed in the outer area of the first metal C-200, respectively, as shown in FIG. 35. Thus, the outer area of the metal sheet C-10' may be pressed in the up and down direction by the first pressurizing part C-210 and the second pressurizing part C-410. Two deformation portions C-120 may be further formed in the outer area of the metal sheet C-10A, by the second press forming process.

Next, in S400, the first mold C-200 may rise in the opposite direction +Z to the pressurizing direction -Z, as shown in FIG. 36. Accordingly, the press formed part C-10' in a state of completing press forming may be separated from the first mold C-200, the intermediate pressurizing part C-300, and the second mold C-400. In this process, the two intermediate pressurizing parts C-300 may rise and return to its original position at the working position as described above.

Next, after the press formed part C-10' after manufacturing is discharged from the manufacturing device C-20', a new metal sheet C-10' is supplied and the next press forming process may start.

Meanwhile, when the number of deformation portions C-120 formed in the press formed part C-10' increases, the number of intermediate pressurizing parts C-300 may also increase correspondingly.

For example, though not shown in the drawing, when 5 deformation portions C-120 are formed in the press formed part C-10', five first pressurizing parts C-210 should be provided in the first mold C-200. Accordingly, the three intermediate pressurizing parts C-300 may be disposed to face the three first pressurizing parts C-210 disposed in the center area of the first mold C-200. In this case, the three intermediate pressurizing part C-300 may be disposed between

the first mold C-200 and the second mold C-400.

Among the three intermediate pressurizing parts C-300, one intermediate pressurizing part C-300 disposed in the center (hereinafter, referred to as first intermediate pressurizing part) may be disposed at the highest position. The remaining two intermediate pressurizing parts C-300 (hereinafter, referred to as second intermediate pressurizing parts) may be disposed between the first intermediate pressurizing part C-300 and the second mold C-400. Herein, the two second intermediate pressurizing part C-300 may be disposed at the same height. A height difference between the first intermediate pressurizing part C-300 and the second intermediate pressurizing part C-300 may be identical or similar to the height difference (hi) between the intermediate pressurizing part C-300 described above and the second pressurizing part C-410.

First, the first press forming may be performed in the state of being dispose, by the first mold C-200 and the first intermediate pressurizing part C-300. After or immediately before the completion of the first press forming, the first mold C-200 further descends together with the first intermediate pressurizing part C-300, thereby performing second press forming by the first mold C-200 and the two second intermediate pressurizing part C-300. Forming of the center area of the metal sheet C-10A may be first performed by the two press forming. Thereafter, after or immediately before the completion of the second press forming, the first mold C-200 further descends, thereby performing third press forming by the outer area of the metal sheet C-10A by the first mold C-200 and the second mold C-400.

As another example, though not shown in the drawing, when six deformation portions C-120 are formed in the press formed part C-10', six first pressurizing parts C-210 should be provided in the first mold C-200. Accordingly, the four intermediate pressurizing parts C-300 may be disposed to face the four first pressurizing parts C-210 disposed in the center area of the first mold C-200. In this case, the four intermediate pressurizing part C-300 may be disposed between the first mold C-200 and the second mold C-400.

Among the four intermediate pressurizing parts C-300, two intermediate pressurizing parts C-300 disposed in the center (hereinafter, referred to as first intermediate pressurizing part) may be disposed at the highest position. The remaining two intermediate pressurizing parts C-300 (hereinafter, referred to as second intermediate pressurizing parts) may be disposed between the first intermediate pressurizing part C-300 and the second mold C-400. Herein, the two fisrt intermediate pressurizing part C-300 may be disposed at the same height. Further, the two second intermediate pressurizing part C-300 may be disposed at the same height. A height difference between the first intermediate pressurizing part C-300 and the second intermediate pressurizing part C-300 may be identical or similar to the height difference (hi) between the intermediate pressurizing part C-300 described above and the second pressurizing part C-410.

First, the first press forming may be performed in the state of being dispose, by the first mold C-200 and the two first intermediate pressurizing parts C-300. After or immediately before completion of the first press forming, the first mold C-200 further descends together with the first intermediate pressurizing parts C-300, thereby performing second press forming by the first mold C-200 and the two second intermediate pressurizing part C-300. Forming of the center area of the metal sheet C-10A may be first performed by the two press forming. Thereafter, after or immediately before the completion of the second press forming, the first mold C-200 further descends, thereby performing third press forming by the outer area of the metal sheet C-10A by the first mold C-200 and the second mold C-400.

In addition, when the number of deformation portions C-120 formed in the press formed part C-10' is increased to 7 or more, the number of the first pressurizing parts C-210 and the number of the intermediate pressurizing parts C-300 should be further increased, similarly to the above. Accordingly, the number of the penetration parts C-420aa in the second mold C-400 may be increased, of course. The press forming of the center area of the metal sheet C-10A is first performed by the method of adding a press forming process, in a state of configuring the manufacturing device as such, and then the press forming of the outer area of the metal sheet C-10A may be performed.

In the press forming parts C-10 and C-10' according to example embodiments of the present disclosure as described above and the manufacturing method thereof (S10), the press forming may be performed on the metal sheets C-10 and C-10' by disposing the intermediate pressurizing part C-300 having a height difference (hi) between the upper/loser molds C-200 and C-400 and using the three pressurizing parts C-210, C-300, and C-410. Herein, a strain being concentrated on a certain position of the metal sheets C-10 and C-10' during press working may be prevented by a stepwise forming process of first pressing the center area of the metal sheets C-10 and C-10', and then sequentially pressing the outer area. Thus, the press formed parts C-10 and C-10' are prevented from being damaged in the manufacturing process, and part quality may be improved.

Hereinabove, although the example embodiments of the present disclosure have been described with reference to the accompanying drawings, those skilled in the art will understand that various modifications and alterations may be made without departing from the spirit or essential feature of the present disclosure. Therefore it should be understood that the above-mentioned example embodiments are illustrative in all aspects and not restrictive.

[Description of Reference Characters]

A-1: Side frame
A-10: Frame
A-20: Bracket
A-21, A-22: Flange
A-23: Main body
A-24: Curved surface
A-100: Punch
A-110, A-120,A-130, A-140, A-150: First to fifth punch forming parts
A-111, A-121,A-131, A-141, A-151: First to fifth extended surface forming parts
A-112, A-122,A-132, A-142, A-152: First to fifth curved surface forming parts
A-113, A-123,A-133, A-143: First to fourth main body forming parts
A-200: Pad
A-300: Die
A-310, A-320,A-330, A-340, A-350: First to fifth die forming parts
A-311, A-321,A-331, A-341, A-351: First to fifth die curved surface forming parts
A-312, A-322,A-332, A-342, A-352: First to fifth die plane forming parts
A-360: Vertical plane
A-400: Material
A-410: Notch
B-1: Battery pack module
B-10: Hot press-formed part
B-20: Battery case
B-30: Base
B-40: Reinforcing member
B-110: First wall
B-120: Second wall
B-130: Third wall
B-140: Fourth wall
B-150: Fifth wall
B-160: Curvature portion
B-170: First connection part
B-180: Second connection part
B-190: Third connection part
b: Battery pack
r: Curvature radius
t: Sheet material thickness
θw: Wall part angle
hw: Wall part height
C-10, C-10': Press formed part
C-10A: Metal sheet
C-110: Flat plate part
C-120: Deformation porttion
C-20, C-20': Press forming device
C-200: First mold
C-210: First protrusion
C-220: First plane part
C-300: Intermediate pressurizing part
C-400: Second mold
C-410: Second protrusion
C-420: Second plane part

Mode for Invention

Hereinafter, the present disclosure will be described in detail by way of the examples. However, it should be noted that the following examples are only for describing the present disclosure by illustration, and not intended to limit the scope of right of the present disclosure. The reason is that the right scope of the present disclosure is determined by the matters described in the claims and reasonably inferred therefrom.

(**Examples)**

A cold rolled steel sheet for hot press forming having the composition of the following Table 2 was prepared as a base steel sheet. The base steel sheet was annealed and heat treated by a common method, and then plated with molten aluminum. A plating bath had a composition substantially of 9.5% of Si, 4.0% or less of Fe, and a remainder of Al, by weight, and the temperature of the plating bath was 660°C. After the plating, the plating deposition amount was adjusted based on one surface, using an air knife. At this time, each plating deposition amount was measured using KS D 3544: 2002, a sodium hydroxide-antimony trichloride hydrochloric acid peeling weight method, and the value is shown in the following

Table 3.

Thereafter, each plated steel sheet was temper rolled with a pressing force shown in Table 3 using a roll having the Ra and RPc values shown in Table 3, thereby adjusting the surface state of the plating layer of each plated steel sheet.

Next, for each temper rolled plated steel sheet, the steel sheet was heated and maintained under the conditions shown in Table 4 under an air atmosphere, and then press-formed and quenched to obtain a hot press-formed member. The each obtained hot press-formed member had a tensile strength of 1000 MPa or more, and its internal structure was confirmed to be substantially composed of a hard phase of martensite and bainite.

In order to confirm the surface characteristics of each of the plated steel sheets and the hot press-formed members manufactured above, the maximum roughness (Rt) and the number of peaks per unit length (RPc, peak/cm) of the surface of each plated steel sheet were measured. At this time, the Rt and RPc values were measured at 5 points according to the standard of JIS B 0301, and the average of the values was calculated and is shown. Among the measured results, the results for the plated steel sheets are shown in the following Table 3, and the results for the hot press-formed members are shown in Table 3 together. In addition, the plating layer thickness (T) as shown of each hot press-formed member was calculated by measuring 5 points at equal intervals at 500× magnification using an optical microscope, measuring other 5 points at equal intervals at the same magnification, and then calculating an average value.

Further, the paint adhesion, the friction coefficient, the adhesive wear weight addition amount, and the alloying degree of each hot press-formed member were evaluated by the following method, and the results are shown in Table 5.

First, a paint adhesion grade was determined by painting the member obtained according to the method of GMW14829, forming lattice scratches at 1 mm intervals, and performing a tape peeling evaluation thereon. When the grade was 0 or less, it was evaluated as good.

The fraction coefficient was evaluated by a strip drawing method on each specimen which was heated and maintained according to the heating conditions shown in the following Table 4 at 750°C, and the friction coefficient value ($\mu$) was calculated according to the following equation:

$$\mu = F_D/(2F_N)$$

wherein FD is a force to pull the specimen, and FN is a force which the mold applies to the specimen during friction, and during the evaluation, pressure was 5 MPa, a pulling speed was 100 mm/sec, and a pulling distance was 280 mm. In addition, a SKD11 tool steep which was surface-treated with chromium (Cr) was used as a mold, and the hardness value of the mold was 58.2±0.4 HRC. The mold had a hexahedral shape having a size of 20×20×9 $mm^3$, and the end part of the surface rubbing against the specimen was rounded at 1.5 mm. In order to secure the reliability of the measured value, the measurement was performed a total of 3 times, and then the average value was calculated.

The contact wear weight addition amount as shown was calculated by repeating the process in the same manner as in the measurement of the friction coefficient 10 times, measuring the weight of the attachments attached to the mold, and calculating a difference in an increase in weight after the test compared to the weight before the test.

The alloying degree is shown as a value (average value) obtained by collecting a sample in any 5 points of each hot formed member, observing the plating layer cross section of each sample with a magnification of 1000 times using an optical microscope, calculating a completely alloyed area without a remaining Al plating layer from the area of the entire plating layer.

[Table 2]

| Steel type | Alloy composition (wt%) | | | | | | | | | | | |
|---|---|---|---|---|---|---|---|---|---|---|---|---|
| | C | Si | Mn | P | S | Al | N | Ti | Nb | B | Cr | Mo | Others |
| A | 0.08 | 0.70 | 1.5 | 0.010 | 0.0150 | 0.080 | 0.0070 | 0.030 | 0.03 | 0.0020 | 0.20 | 0 | Cu 0.4<br>Ni 0.2<br>Mg 0.05 |
| B | 0.22 | 0.10 | 1.2 | 0.012 | 0.0100 | 0.020 | 0.0040 | 0.040 | 0 | 0.0030 | 0.30 | 0 | W 0.50<br>Ca 0.05<br>Co 0.30 |
| C | 0.31 | 1.00 | 1.8 | 0.011 | 0.0050 | 0.040 | 0.0120 | 0.150 | 0 | 0.0050 | 0.10 | 0.15 | Sb 0.03<br>Sn 0.04<br>As 0.05 |

(continued)

| Steel type | Alloy composition (wt%) | | | | | | | | | | | | |
|---|---|---|---|---|---|---|---|---|---|---|---|---|---|
| | C | Si | Mn | P | S | Al | N | Ti | Nb | B | Cr | Mo | Others |
| D | 0.42 | 0.02 | 0.8 | 0.007 | 0.0020 | 0.120 | 0.0010 | 0.001 | 0.15 | 0 | 0.80 | 0 | V 0.5<br>REM 0.1<br>Zr 0.30<br>Bi 0.03 |

[Table 3]

| Steel type | Plating conditions | | Temper rolling roll conditions | | | Plated steel sheet plating layer surface | | | Classification |
|---|---|---|---|---|---|---|---|---|---|
| | Upper/lower surface | Deposition amount (g/m$^2$) | Ra (μm) | RPc (peak/cm) | Pressing force (ton) | Rt (μm) | RPc (peak/cm) | Relation 1 | |
| A | Upper | 75.9 | 1.0 | 45 | 400 | 3.2 | 25 | 26.9 | Comparative Example 1 |
| | Lower | 73.2 | | | | 3.4 | 24 | 26.1 | |
| A | Upper | 74.6 | 3.0 | 114 | 100 | 4.5 | 75 | 27.1 | Inventive Example 1 |
| | Lower | 74.4 | | | | 4.7 | 74 | 27.2 | |
| A | Upper | 77.2 | 3.0 | 48 | 100 | 4.3 | 34 | 27.9 | Inventive Example 2 |
| | Lower | 75.7 | | | | 4.6 | 38 | 27.5 | |
| B | Upper | 70.6 | 1.0 | 45 | 100 | 2.9 | 32 | 25.0 | Comparative Example 2 |
| | Lower | 64.5 | | | | 2.8 | 30 | 22.9 | |
| B | Upper | 72.3 | 3.0 | 114 | 100 | 8.6 | 85 | 28.4 | Inventive Example 3 |
| | Lower | 69.0 | | | | 8.2 | 86 | 27.1 | |
| B | Upper | 71.2 | 6.0 | 106 | 50 | 21.3 | 78 | 34.4 | Comparative Example 3 |
| | Lower | 58.1 | | | | 15.1 | 78 | 26.9 | |
| C | Upper | 81.6 | 3.0 | 114 | 500 | 14.1 | 60 | 34.3 | Inventive Example 4 |
| | Lower | 74.7 | | | | 14.5 | 56 | 32.2 | |
| C | Upper | 81.5 | 6.0 | 62 | 400 | 21.4 | 45 | 37.9 | Inventive Example 5 |
| | Lower | 76.2 | | | | 20.7 | 46 | 35.8 | |
| C | Upper | 90.1 | 2.0 | 114 | 500 | 10.1 | 57 | 35.1 | Inventive Example 6 |
| | Lower | 81.2 | | | | 9.8 | 57 | 32.0 | |
| D | Upper | 82.6 | 3.0 | 48 | 500 | 14.8 | 35 | 34.9 | Inventive Example 7 |
| | Lower | 91.4 | | | | 14.2 | 35 | 37.6 | |
| D | Upper | 80.4 | 6.0 | 106 | 600 | 26.1 | 75 | 39.9 | Comparative Example 4 |
| | Lower | 76.1 | | | | 26.7 | 75 | 38.7 | |

As shown in Table 3, it was confirmed that the surface characteristics of the obtained plated steel sheets in which the plating conditions and the temper rolling conditions satisfied the suggestions in an example embodiment of the present disclosure satisfied the purpose of the present disclosure.

However, when the conditions or the pressing force conditions of the temper rolling were out of the scope of an example embodiment of the present disclosure, at least one of the plating layer surface characteristics was not able to be satisfied.

[Table 4]

| Steel type | Plating surface | Heating conditions | | Hot press-formed member | | | | Classification |
|---|---|---|---|---|---|---|---|---|
| | | Temperature (°C) | Retention time (min) | Plating layer thickness (μm) | Rt (μm) | RPc (peak/cm) | Relation 2 | |
| A | Upper | 930 | 5 | 34.6 | 6.2 | 57 | 37.7 | Comparative Example 1 |
| | Lower | | | 33.4 | 5.3 | 58 | 36.1 | |
| A | Upper | 930 | 5 | 36.2 | 9.4 | 101 | 40.9 | Inventive Example 1 |
| | Lower | | | 36.1 | 9.5 | 100 | 40.9 | |
| A | Upper | 930 | 5 | 40.5 | 6.9 | 65 | 44.0 | Inventive Example 2 |
| | Lower | | | 38.4 | 7.0 | 67 | 41.9 | |
| B | Upper | 930 | 5 | 35.7 | 6.0 | 59 | 38.7 | Comparative Example 2 |
| | Lower | | | 32.1 | 5.8 | 58 | 35.0 | |
| B | Upper | 930 | 5 | 38.0 | 11.7 | 126 | 43.9 | Inventive Example 3 |
| | Lower | | | 35.1 | 11.6 | 128 | 40.9 | |
| B | Upper | 950 | 5 | 38.0 | 19.5 | 131 | 47.8 | Comparative Example 3 |
| | Lower | | | 24.7 | 18.4 | 135 | 33.9 | |
| C | Upper | 930 | 5 | 43.2 | 14.1 | 94 | 50.3 | Inventive Example 4 |
| | Lower | | | 40.5 | 14.3 | 91 | 47.7 | |
| C | Upper | 930 | 5 | 44.8 | 19.2 | 85 | 54.4 | Inventive Example 5 |
| | Lower | | | 41.5 | 18.4 | 86 | 50.7 | |
| C | Upper | 930 | 5 | 49.0 | 15.1 | 92 | 56.6 | Inventive Example 6 |
| | Lower | | | 46.7 | 15.0 | 92 | 54.2 | |
| D | Upper | 900 | 5 | 46.4 | 18.0 | 61 | 55.4 | Inventive Example 7 |
| | Lower | | | 48.1 | 17.5 | 62 | 56.9 | |
| D | Upper | 950 | 5 | 48.2 | 26.8 | 132 | 61.6 | Comparative Example 4 |
| | Lower | | | 48.0 | 26.9 | 134 | 61.5 | |

[Table 5]

| Classificat ion | Plating surface | Friction coefficient | Alloying degree | Paint adhesion | Adhesive wear weight increase amount (mg) |
|---|---|---|---|---|---|
| Comparative Example 1 | Upper | 0.53 | 100 | 2 | 2 |
| | Lower | | 100 | 2 | 2 |
| Inventive Example 1 | Upper | 0.49 | 100 | 0 | 4 |
| | Lower | | 100 | 0 | 4 |
| Inventive Example 2 | Upper | 0.47 | 100 | 0 | 2 |
| | Lower | | 100 | 0 | 1 |
| Comparative Example 2 | Upper | 0.54 | 100 | 1 | 2 |
| | Lower | | 100 | 1 | 2 |
| Inventive Example 3 | Upper | 0.47 | 100 | 0 | 5 |
| | Lower | | 100 | 0 | 4 |

(continued)

| Classificat ion | Plating surface | Friction coefficient | Alloying degree | Paint adhesion | Adhesive wear weight increase amount (mg) |
|---|---|---|---|---|---|
| Comparative Example 3 | Upper | 0.44 | 100 | 0 | 8 |
| | Lower | | 100 | 0 | 9 |
| Inventive Example 4 | Upper | 0.43 | 100 | 0 | 3 |
| | Lower | | 100 | 0 | 2 |
| Inventive Example 5 | Upper | 0.42 | 100 | 0 | 3 |
| | Lower | | 100 | 0 | 3 |
| Inventive Example 6 | Upper | 0.41 | 100 | 0 | 3 |
| | Lower | | 100 | 0 | 3 |
| Inventive Example 7 | Upper | 0.41 | 100 | 0 | 5 |
| | Lower | | 100 | 0 | 5 |
| Comparative Example 4 | Upper | 0.37 | 96 | 0 | 7 |
| | Lower | | 97 | 0 | 8 |

As shown in Tables 4 and 5, it was confirmed that the hot press-formed members obtained by hot press forming the plated steel sheets having the surface characteristics intended in the present disclosure satisfied the suggestions in an example embodiment of the present disclosure. Each hot press-formed member had good or excellent friction coefficient, plating adhesion, adhesive wear characteristics, and alloying characteristics.

However, when the plated steel sheet which did not have the surface characteristics intended in the present disclosure was hot press-formed (comparative examples), at least one characteristic of the surface characteristics of the obtained hot press-formed members did not satisfy the suggestions in an example embodiment of the present disclosure.

Besides, these hot press-formed members did not satisfy one or more of the physical properties shown in Table 5. Comparative Examples 1 and 2 had poor friction coefficient and paint adhesion, and Comparative Examples 3 and 4 had poor adhesion wear characteristics.

While example embodiments have been shown and described above, it will be apparent to those skilled in the art that modifications and variations could be made without departing from the scope of the present disclosure as defined by the appended claims.

## Claims

**1.** A plated steel sheet for hot press forming comprising: a base steel sheet; and an aluminum-based plating layer on one or both surfaces of the base steel sheet,

wherein a surface of the plating layer has a maximum roughness (Rt) of 4.0 to 5.0 μm, and
a relationship between a deposition amount of the plating layer and Rt satisfies the following Relation 1:

[Relation 1]

$$27.0 \leq (ⓒ/3)+(Rt/2) \leq 38.0$$

wherein the unit of Relation 1 is μm, and ⓒ is a plating deposition amount.

**2.** The plated steel sheet for hot press forming of claim 1, wherein the aluminum-based plating layer has the number of peaks per unit length (RPc) of 30 to 90 peaks/cm.

**3.** The plated steel sheet for hot press forming of claim 1, wherein the aluminum-based plating layer has a composition including, by weight: 5.0 to 11.0% of silicon (Si), 10.0% or less of iron (Fe), a remainder of aluminum (Al), and unavoidable impurities.

4. The plated steel sheet for hot press forming of claim 1, wherein the base steel sheet has a composition including, by weight: 0.02 to 0.60% of carbon (C), 0.001 to 2.000% of silicon (Si), 0.001 to 1.000% of aluminum (Al), 0.1 to 4.0% of manganese (Mn), 0.050% or less of phosphorus (P), 0.0200% or less of sulfur (S), 0.0200% or less of nitrogen (N), 0 to 1.0000% of titanium (Ti), 0 to 1.0000% of niobium (Ni), 0 to 1.0000% of vanadium (V), 0 to 0.0100% of boron (B), 0 to 1.00% of chromium (Cr), 0 to 1.00% of molybdenum (Mo), 0 to 1.00% of tungsten (W), 0 to 1.0% of copper (Cu), 0 to 1.0% of nickel (Ni), 0 to 1.00% of antimony (Sb), 0 to 1.00% of tin (Sn), 0 to 0.10% of calcium (Ca), 0 to 0.10% of magnesium (Mg), 0 to 1.00% of cobalt (Co), 0 to 1.00% of arsenic (As), 0 to 1.00% of zirconium (Zr), 0 to 1.00% of bismuth (Bi), 0 to 0.3% of rare earth elements (REM), a remainder of Fe, and unavoidable impurities.

5. A method for manufacturing a plated steel sheet for hot press forming, the method comprising:

preparing a base steel sheet;
forming an aluminum-based plating layer on one or both surfaces of the base steel sheet to obtain a plated steel sheet; and
temper rolling the plated steel sheet,
wherein the temper rolling is performed with a pressing force of 100 to 500 ton using a roll having a surface of Ra: 2.0 to 8.0 μm and RPc: 46 to 120 peaks/cm.

6. The method for manufacturing a plated steel sheet for hot press forming of claim 5, wherein the forming of an aluminum-based plating layer to obtain a plated steel sheet is performed by immersing the base steel sheet in an Al-based plating bath including, by weight: 5.0 to 11.0% of Si, 4.0% or less of Fe, a remainder of Al, and unavoidable impurities.

7. The method for manufacturing a plated steel sheet for hot press forming of claim 5, further comprising heating the plated steel sheet on which the aluminum-based plating layer has been formed to a temperature range of 670 to 900°C to perform an alloying heat treatment.

8. The method for manufacturing a plated steel sheet for hot press forming of claim 5, wherein the base steel sheet has a composition including, by weight: 0.02 to 0.60% of carbon (C), 0.001 to 2.000% of silicon (Si), 0.001 to 1.000% of aluminum (Al), 0.1 to 4.0% of manganese (Mn), 0.050% or less of phosphorus (P), 0.0200% or less of sulfur (S), 0.0200% or less of nitrogen (N), 0 to 1.0000% of titanium (Ti), 0 to 1.0000% of niobium (Ni), 0 to 1.0000% of vanadium (V), 0 to 0.0100% of boron (B), 0 to 1.00% of chromium (Cr), 0 to 1.00% of molybdenum (Mo), 0 to 1.00% of tungsten (W), 0 to 1.0% of copper (Cu), 0 to 1.0% of nickel (Ni), 0 to 1.00% of antimony (Sb), 0 to 1.00% of tin (Sn), 0 to 0.10% of calcium (Ca), 0 to 0.10% of magnesium (Mg), 0 to 1.00% of cobalt (Co), 0 to 1.00% of arsenic (As), 0 to 1.00% of zirconium (Zr), 0 to 1.00% of bismuth (Bi), 0 to 0.3% of rare earth elements (REM), a remainder of Fe, and unavoidable impurities.

9. A hot formed member comprising: a base steel sheet and an aluminum-based plating layer which is formed on the base steel sheet and has a thickness (T) of 30.0 to 50.0 μm,

wherein a surface of the plating layer has a maximum roughness (Rt) of 6.0 to 26.0 μm, and
a relationship between the thickness of the plating layer and Rt satisfies the following Relation 2:

[Relation 2]

$$40.0 \leq T + (Rt/2) \leq 57.0$$

wherein the unit of Relation 2 is μm, and T is the thickness of the plating layer.

10. The hot formed member of claim 9, wherein the aluminum-based plating layer has the number of peaks per unit length (RPc) of 60 to 130 peaks/cm.

11. The hot formed member of claim 9, wherein the aluminum-based plating layer is composed of an Al-Fe alloy having the sum of the contents of Al and Fe of 89 wt% or more.

12. The hot formed member of claim 9, wherein the member has a friction coefficient of 0.50 or less.

13. The hot formed member of claim 9, wherein the base steel sheet has a composition including, by weight: 0.02 to 0.60%

of carbon (C), 0.001 to 2.000% of silicon (Si), 0.001 to 1.000% of aluminum (Al), 0.1 to 4.0% of manganese (Mn), 0.050% or less of phosphorus (P), 0.0200% or less of sulfur (S), 0.0200% or less of nitrogen (N), 0 to 1.0000% of titanium (Ti), 0 to 1.0000% of niobium (Ni), 0 to 1.0000% of vanadium (V), 0 to 0.0100% of boron (B), 0 to 1.00% of chromium (Cr), 0 to 1.00% of molybdenum (Mo), 0 to 1.00% of tungsten (W), 0 to 1.0% of copper (Cu), 0 to 1.0% of nickel (Ni), 0 to 1.00% of antimony (Sb), 0 to 1.00% of tin (Sn), 0 to 0.10% of calcium (Ca), 0 to 0.10% of magnesium (Mg), 0 to 1.00% of cobalt (Co), 0 to 1.00% of arsenic (As), 0 to 1.00% of zirconium (Zr), 0 to 1.00% of bismuth (Bi), 0 to 0.3% of rare earth elements (REM), a remainder of Fe, and unavoidable impurities.

[FIG.1]

A-1
A-20
A
R1
A-10
A-10
A'

[FIG.2]

A-21
R2
A-23
A-22
A-A'

[FIG.3]

A-300
A-360
A-312
A-351
A-310
A-331a
A-331
A-311
A-350
A-311a
A-352
A-321a
A-342
A-321
A-340
A-322
A-350
A-320
A-341
A-341a
A-332
A-341
A-330
A-352
A-340
A-342
A-200
A-230
A-210
A-250
A-220
A-240
A-160
A-100
A-113
A-133
A-123
A-143
A-112
A-110
A-111
A-160
A-121
r
A-150
A-151
A-120
A-122
A-150
A-131
A-152
A-141
A-142
A-130
A-140
A-132
4
2
3

[FIG.4]

A-110
A-311a
A-311
A-312
A-310
A-160
A-113
A-111
A-110
A-112
A-122
A-322
A-320
A-120
A-121
A-123
A-321
A-321a
Rp
Rd
A-133
A-130
A-131
A-330
A-331a
ℓd
a
ℓp
A-331
A-143
b
θ
A-340
A-141
A-140
c
A-360
A-150
A-151
A-200
A-160
A-352
A-350
A-351
4
2
3

[FIG.5]

S100
START
SETTLE MATERIAL
S110
FIRST FORM
S120
SECOND FORM
S130
COOL
S140
TRIM
S150
END

[FIG.6]

A-410
A-400
A-410

[FIG.7]

A-210
A-200
A-230
A-220
A-400
A-100
A-210
A-230
A-220
A-400
A-200
A-100
4
2
3

[FIG.8]

A-300
A-400
A-300
A-300
A-400
A-100
A-300
A-400
A-300
A-300
A-400
A-100
A-300
A-400
A-300
A-300
A-400
A-100
A-300
A-400
A-300
A-300
A-400
A-100

[FIG.9a]

A-300
A-400
A-100
A-300
A-100
A-400
A-300
A-100
A-400
4
3
2

[FIG.9b]

A-300
A-100
A-400
A-100
A-300
A-400
A-100
A-300
A-400

[FIG.10]

A-170
A-100
A-300
A-370
A-370
A-400

[FIG.11]

A-410
A-400
A-420
2
3
4

[FIG.12]

A-20
Rp
θ
r
A-24
A-22
A-23
A-21
3
2
4

[FIG.13]

Thinning (engineer value)

0.250
0.222
0.194
0.167
0.139
0.111
0.083
0.056
0.028
0.000

[FIG. 14]

Thinning (engineer value)
0.250
0.222
0.194
0.167
0.139
0.111
0.083
0.056
0.028
0.000

[FIG. 15]

EMBODIMENT 1-1
COMPARATIVE ILLUSTRATION 1-1
THICKNESS REDUCTION RATE
LENGTH IN CROSS SECTION
0.6
0.4
0.2
0
-0.2
-0.4
-0.6
-0.8
-1

[FIG.16]

A-300
A-100
A-400
A-300
A-100
A-400
A-300
A-100
A-400
A-300
A-100
A-400

[FIG.17]

B

[FIG.18]

B-10
B-170
B-130
B-180
B-150
B-120
B-190
B-110
B-160
B-140
Z
Y
X

[FIG.19]

B-10
B-130
θw
B-170
B-180
t
B-120
B-150
hw
B-140
r
B-110
B-160
B-190
Z
Y
X

[FIG.20a]

CRACK
RISK OF CRACK
SAFE
WRINKLE TENDENCY
WRINKLE
SEVERE WRINKLE
INSUFFICIENT STRETCH
Z
Y
X

[FIG.20b]

CRACK
RISK
OF CRACK
SAFE
WRINKLE
TENDENCY
WRINKLE
SEVERE
WRINKLE
INSUFFICIENT
STRETCH
Z
Y
X

[FIG.21a]

CRACK
RISK
OF CRACK
SAFE
WRINKLE
TENDENCY
WRINKLE
SEVERE
WRINKLE
INSUFFICIENT
STRETCH
Z
Y
X

[FIG.21b]

CRACK
RISK OF CRACK
SAFE
WRINKLE TENDENCY
WRINKLE
SEVERE WRINKLE
INSUFFICIENT STRETCH
Z
Y
X

[FIG.22]

B-1

B-10
B-20
B-40
B-30
Z
Y
X

[FIG.23]

(a)
b
B-10a
g1
b
r1
Z
Y
X
(b)
b
B-10b
g2
b
r2
Z
Y
X

[FIG.24]

C-10
C-120b
C-120a
C-110
C-110
C-120b
C-110'
C-110'
Z
Y
X
w
w
h
C-120
C-120a
C-120b
C-121
C-121a
C-121a
C-110
C-110
C-122
C-122
C-123
C-123
Z
Y

[FIG.25]

C-110'
W
W
W
h
C-120b
C-110
C-120a
C-110
C-120a
C-110
C-120b
C-110'
C-10'
C-120
C-120a
C-120b
X
Y
Z

[FIG.26]

12000
10000
8000
6000
4000
2000
0
Hat distance, mm
W=114.85e^0.0455h
R^2 =0.9731
GOOD
CRACK
10
30
50
70
90
Hat height, mm

(a)

5000
4000
3000
2000
1000
0
Hat distance, mm
W=46.309e^0.105h
R^2 =0.917
GOOD
CRACK
10
20
30
40
50
Hat height, mm

(b)

[FIG.27]

CRACK
RISK
OF CRACK
SAFE
WRINKLE
TENDENCY
WRINKLE
SEVERE
WRINKLE
INSUFFICIENT
STRETCH
B1
A1

(a)

CRACK
RISK
OF CRACK
SAFE
WRINKLE
TENDENCY
WRINKLE
SEVERE
WRINKLE
INSUFFICIENT
STRETCH
B2
A2

(b)

[FIG.28]

START
S100
SUPPLY METAL SHEET
S200
FIRST FORM METAL SHEET BETWEEN UPPER MOLD AND INTERMEDIATE PRESSURIZING PART
S300
SECOND FORM METAL SHEET BETWEEN UPPER MOLD AND LOWER MOLD
S400
RAISE UPPER MOLD AND INTERMEDIATE PRESSURIZING PART
S500
DISCHARGE METAL SHEET AFTER FORMING
END

[FIG.29]

C-20
C-10A
hi
C-210
C-220
C-410
C-420a
C-420aa
C-420b
C-300
C-200
C-400
Z
Y

[FIG.30]

C-20
C-10A
C-210
C-220
C-210
C-220
C-210
C-220
C-300
C-410
C-420a
C-420aa
C-420a
C-410
C-420b
C-420b
C-200
C-210
C-220
C-400
C-410
C-420a
C-420b
Z
Y

[FIG.31]

C-20
C-10
C-210
C-220
C-410
C-420a
C-420aa
C-420b
C-300
C-200
C-400
Z
Y

[FIG.32]

C-20
C-210
C-220
C-110
C-120a
C-120b
W
h
C-10
hi
C-300
420aa
C-410
C-420a
C-420b
C-200
C-400
C-120
Z
Y

[FIG.33]

C-20'
C-10A
hi
C-210
C-220
C-300
C-410
C-420a
C-420aa
C-420b
C-200
C-400
Z
Y

[FIG.34]

C-20'
C-10A
C-220
C-210
C-220
C-210
C-220
C-210
C-220
C-210
C-410
C-420b
C-420a
C-300
C-420aa
C-420a
C-300
C-420aa
C-420a
C-410
C-420b
C-200
C-210
C-220
C-400
C-410
C-420a
C-420b
Z
Y

[FIG.35]

C-20'
C-210
C-220
C-410
C-420b
C-10'
C-420a
C-300
C-420aa
C-400
C-200
Z
Y

[FIG.36]

C-20'
C-210
C-220
C-120a
C-120b
C-110
W
h
hi
C-10'
C-300
C-420aa
C-420a
C-420b
C-410
C-200
C-400
C-120
Z
Y

**INTERNATIONAL SEARCH REPORT**

International application No.
**PCT/KR2024/096426**

**A. CLASSIFICATION OF SUBJECT MATTER**

**B21D 53/88**(2006.01)i; **B21D 22/02**(2006.01)i; **B21D 24/00**(2006.01)i; **B21D 39/02**(2006.01)i; **B21D 5/02**(2006.01)i; **B21D 13/02**(2006.01)i; **B21D 37/16**(2006.01)i; **B21D 37/10**(2006.01)i; **B21D 43/28**(2006.01)i

According to International Patent Classification (IPC) or to both national classification and IPC

**B. FIELDS SEARCHED**

Minimum documentation searched (classification system followed by classification symbols)

B21D 53/88(2006.01); B21D 22/02(2006.01); B21D 22/20(2006.01); C21D 1/18(2006.01); C21D 1/74(2006.01); C21D 9/00(2006.01); C21D 9/46(2006.01); C22C 21/00(2006.01); C22C 38/58(2006.01); C23C 2/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열간 프레스(hot press), 강판(steel sheet), 알루미늄(aluminum), 도금(plating), 거칠기(roughness) 및 조질 압연(temper rolling)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2022-0106776 A (BAOSHAN IRON & STEEL CO., LTD.) 29 July 2022 (2022-07-29)<br>See paragraphs [0007]-[0017] and [0075]-[0106] and claims 1-7, 13 and 14. | 1-4,9-13<br>5-8 |
| Y | KR 10-2023-0096381 A (POSCO) 30 June 2023 (2023-06-30)<br>See paragraphs [0178]-[0191]. | 5-8 |
| A | KR 10-2020-0076741 A (NIPPON STEEL CORPORATION) 29 June 2020 (2020-06-29)<br>See paragraphs [0195]-[0234] and figures 3-5. | 1-13 |
| A | KR 10-2017-0060167 A (NIPPON STEEL & SUMITOMO METAL CORPORATION) 31 May 2017 (2017-05-31)<br>See paragraphs [0092]-[0133] and figures 1a-2. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2025** | **07 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No. **PCT/KR2024/096426**

**C. DOCUMENTS CONSIDERED TO BE RELEVANT**

| Category* | Citation of document, with indication, where appropriate, of the relevant passages | Relevant to claim No. |
|---|---|---|
| A | US 2022-0177992 A1 (JFE STEEL CORPORATION) 09 June 2022 (2022-06-09) See paragraphs [0169]-[0188]. | 1-13 |

Form PCT/ISA/210 (second sheet) (July 2022)

**INTERNATIONAL SEARCH REPORT**
**Information on patent family members**

International application No.
**PCT/KR2024/096426**

| Patent document cited in search report | Publication date (day/month/year) | Patent family member(s) | Publication date (day/month/year) |
|---|---|---|---|
| KR 10-2022-0106776 A | 29 July 2022 | CN 112877592 A | 01 June 2021 |
| | | CN 112877592 B | 28 June 2022 |
| | | EP 4067530 A1 | 05 October 2022 |
| | | EP 4067530 A4 | 02 November 2022 |
| | | JP 2023-503151 A | 26 January 2023 |
| | | JP 7326612 B2 | 15 August 2023 |
| | | US 2023-0002843 A1 | 05 January 2023 |
| | | WO 2021-103805 A1 | 03 June 2021 |
| KR 10-2023-0096381 A | 30 June 2023 | CN 118434904 A | 02 August 2024 |
| | | EP 4455357 A1 | 30 October 2024 |
| | | JP 2024-534815 A | 26 September 2024 |
| | | US 2024-0401173 A1 | 05 December 2024 |
| | | WO 2023-121241 A1 | 29 June 2023 |
| KR 10-2020-0076741 A | 29 June 2020 | CN 111511942 A | 07 August 2020 |
| | | CN 111511942 B | 28 December 2021 |
| | | EP 3722447 A1 | 14 October 2020 |
| | | EP 3722447 A4 | 26 May 2021 |
| | | JP 6525124 B1 | 05 June 2019 |
| | | KR 10-2428588 B1 | 03 August 2022 |
| | | US 11535916 B2 | 27 December 2022 |
| | | US 2021-0164080 A1 | 03 June 2021 |
| | | WO 2019-111931 A1 | 13 June 2019 |
| KR 10-2017-0060167 A | 31 May 2017 | CN 105121691 A | 02 December 2015 |
| | | CN 105121691 B | 26 January 2018 |
| | | EP 2980262 A1 | 03 February 2016 |
| | | EP 2980262 A4 | 23 November 2016 |
| | | JP 6042445 B2 | 14 December 2016 |
| | | KR 10-2015-0127725 A | 17 November 2015 |
| | | KR 10-2015200 B1 | 27 August 2019 |
| | | US 10196717 B2 | 05 February 2019 |
| | | US 2016-0060735 A1 | 03 March 2016 |
| | | WO 2014-171417 A1 | 23 October 2014 |
| US 2022-0177992 A1 | 09 June 2022 | CN 113544297 A | 22 October 2021 |
| | | EP 3940091 A1 | 19 January 2022 |
| | | EP 3940091 A4 | 26 January 2022 |
| | | EP 3940091 B1 | 26 June 2024 |
| | | JP 7036214 B2 | 15 March 2022 |
| | | KR 10-2021-0127193 A | 21 October 2021 |
| | | US 12163202 B2 | 10 December 2024 |
| | | WO 2020-184055 A1 | 17 September 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6296805 B
- US 20140056754 A
- KR 102020006635
- KR 1020230092430